(19) Europäisches Patentamt
European Patent Office
Office européen des brevets

(11) **EP 4 660 262 A1**

(12) **EUROPEAN PATENT APPLICATION**
published in accordance with Art. 153(4) EPC

(43) Date of publication:
**10.12.2025 Bulletin 2025/50**

(21) Application number: **23920022.3**

(22) Date of filing: **27.12.2023**

(51) International Patent Classification (IPC):
***C09D 11/38*** *(2014.01)* ***C09D 11/40*** *(2014.01)*
***C09D 11/101*** *(2014.01)*

(52) Cooperative Patent Classification (CPC):
**C09D 11/101; C09D 11/38; C09D 11/40**

(86) International application number:
**PCT/JP2023/047087**

(87) International publication number:
**WO 2024/161887 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.01.2023 JP 2023013499**

(71) Applicant: **FUJIFILM Corporation**
**Tokyo 106-8620 (JP)**

(72) Inventor: **UMEBAYASHI, Tsutomu**
**Ashigarakami-gun, Kanagawa 258-8577 (JP)**

(74) Representative: **Klunker IP Patentanwälte PartG mbB**
**Destouchesstraße 68**
**80796 München (DE)**

(54) **ACTIVE ENERGY RAY-CURABLE INKJET INK, ACTIVE ENERGY RAY-CURABLE INK SET, AND IMAGE RECORDING METHOD**

(57) Provided is an active energy ray curable type ink jet ink containing a bifunctional (meth)acrylate having a linear or branched alkylene group having 4 to 10 carbon atoms, a silicone-based surfactant having a (meth)acryloyl group, a coloring agent, and an acrylic resin having a glass transition temperature of 30°C or higher. The content of the bifunctional (meth)acrylate with respect to the total mass of the active energy ray curable type ink jet ink is 20% by mass or more. Also provided are applications of the active energy ray curable type ink jet ink.



Processed by Luminess, 75001 PARIS (FR)

## Description

BACKGROUND OF THE INVENTION

1. Field of the Invention

The present disclosure relates to an active energy ray curable type ink jet ink, an active energy ray curable type ink set, and an image recording method.

2. Description of the Related Art

In one previously known method for recording an image on a substrate using an ink, the ink is cured using active energy rays.

For example, JP2018-035369A describes an ink jet ink composition for printing on building materials. The ink jet ink composition includes: a radical polymerizable compound as component A; a radical polymerization initiator as component B; a coloring pigment as component C; and a pigment dispersing agent as component D. Component A includes benzyl (meth)acrylate and/or 2-phenoxyethyl (meth)acrylate as component A-1, a monofunctional or bifunctional (meth)acrylate compound having an aliphatic hydrocarbon group having 6 or more carbon atoms as component A-2, and at least one selected from the group consisting of compounds represented by the following formulas II and III as component A-3. The total content of component A-1 with respect to the total mass of the ink composition is 10 to 50% by mass, and the total content of component A-2 with respect to the total mass of the ink composition is 5 to 40% by mass. The total content of component A-3 with respect to the total mass of the ink composition is 10 to 50% by mass, and the inkjet ink composition includes, as component C, at least one inorganic pigment selected from the group consisting of Pigment Blue 28, Pigment Red 101, Pigment Yellow 42, and Pigment Yellow 184.

SUMMARY OF THE INVENTION

In some cases, an image recorded article obtained by applying an ink to a substrate is required to have good rubfastness and good image separability from the substrate.

The present disclosure has been made in view of the foregoing circumstances, and an object to be achieved by embodiments of the present invention is to provide an active energy ray curable type ink jet ink capable of providing an image recorded article having good rubfastness and good image separability from a substrate and to provide an active energy ray curable type ink set and an image recording method.

The present disclosure includes the following aspects.

<1> An active energy ray curable type ink jet ink including: a bifunctional (meth)acrylate having a linear or branched alkylene group having 4 to 10 carbon atoms; a silicone-based surfactant having a (meth)acryloyl group; a coloring agent; and an acrylic resin having a glass transition temperature of 30°C or higher, wherein a content of the bifunctional (meth)acrylate with respect to a total mass of the active energy ray curable type ink jet ink is 20% by mass or more.

<2> The active energy ray curable type ink jet ink according to <1>, wherein a ratio of a content mass of the silicone-based surfactant having a (meth)acryloyl group to a content mass of the acrylic resin is 1 to 10.

<3> The active energy ray curable type ink jet ink according to <1> or <2>, wherein a ratio of a content mass of the silicone-based surfactant having a (meth)acryloyl group to a content mass of the acrylic resin is 4 to 7.

<4> The active energy ray curable type ink jet ink according to any one of <1> to <3>, wherein a content of the silicone-based surfactant having a (meth)acryloyl group with respect to the total mass of the active energy ray curable type ink jet ink is 0.5% by mass to 10% by mass.

<5> The active energy ray curable type ink jet ink according to any one of <1> to <4>, wherein a content of the silicone-based surfactant having a (meth)acryloyl group with respect to the total mass of the active energy ray curable type ink jet ink is 4% by mass to 7% by mass.

<6> The active energy ray curable type ink jet ink according to any one of <1> to <5>, wherein the silicone-based surfactant having a (meth)acryloyl group includes a polyether structure and a polysiloxane structure, and wherein a ratio of a content mass of the polysiloxane structure to a content mass of the polyether structure is 0.5 or more.

<7> The active energy ray curable type ink jet ink according to any one of <1> to <6>, further including a monofunctional (meth)acrylate having a hydroxy group.

<8> The active energy ray curable type ink jet ink according to any one of <1> to <7>, wherein the acrylic resin has a weight average molecular weight of 5,000 to 100,000.

<9> An active energy ray curable type ink set including: a first ink that is the active energy ray curable type ink jet ink

according to any one of <1> to <8> with the coloring agent being a pigment different from a white pigment; and a second ink that is the active energy ray curable type ink jet ink according to any one of <1> to <8> with the coloring agent being a white pigment.

<10> The active energy ray curable type ink set according to <9>, wherein, provided that a mass of the first ink is the same as a mass of the second ink, a content of the acrylic resin in the first ink is larger than a content of the acrylic resin in the second ink.

<11> The active energy ray curable type ink set according to <9> or <10>, further including a third ink including at least one acid group-containing compound selected from the group consisting of an acid group-containing polymerizable monomer and an acid group-containing polymer.

<12> The active energy ray curable type ink set according to <11>, wherein, provided that a mass of the first ink, a mass of the second ink, and a mass of the third ink are the same, a content of the acrylic resin in the first ink is larger than a content of the acrylic resin in the second ink, and the content of the acrylic resin in the first ink is larger than a content of the acrylic resin in the third ink.

<13> An image recording method including the steps of: applying the active energy ray curable type ink jet ink according to any one of <1> to <8> to a substrate using an ink jet recording method; and irradiating the applied active energy ray curable type ink jet ink with active energy rays.

<14> An image recording method that uses the active energy ray curable type ink set according to any one of <9> to <12>, the method including the steps of: applying the second ink to a substrate using an ink jet recording method; irradiating the applied second ink with active energy rays; applying, using the ink jet recording method, the first ink to the substrate with the second ink applied thereto; and irradiating the applied first ink with active energy rays.

Embodiments of the present invention provide an active energy ray curable type ink jet ink capable of providing an image recorded article having good rubfastness and good image separability from a substrate and provide an active energy ray curable type ink set and an image recording method.

DESCRIPTION OF THE PREFERRED EMBODIMENTS

The active energy ray curable type ink jet ink of the disclosure, the active energy ray curable type ink set of the disclosure, and the image recording method of the disclosure will be described in detail.

In the present specification, a numerical range represented using "to" means a range including the numerical values before and after the "to" as the minimum value and the maximum value, respectively.

In a set of numerical ranges expressed in a stepwise manner in the present specification, the upper or lower limit in one numerical range may be replaced with the upper or lower limit in another numerical range in the set. Moreover, in a numerical range described in the present specification, the upper or lower limit in the numerical range may be replaced with a value indicated in an Example.

In the present specification, when reference is made to the amount of a component in a composition, if the composition contains a plurality of materials corresponding to the component, the amount of the component means the total amount of the plurality of materials in the composition, unless otherwise specified.

In the present specification, a combination of two or more preferred modes is a more preferred mode.

In the present specification, the term "step" is meant to include not only an independent step but also a step that is not clearly distinguished from other steps so long as the prescribed purpose of the step can be achieved.

In the present specification, the term "image" is a general term for films formed by the application of an ink, and the term "image recording" means the formation of an image (i.e., a film).

In the present specification, the concept of "image" also encompasses solid images.

In the present specification, the term "(meth)acrylate" is a concept that encompasses both acrylate and methacrylate. The term "(meth)acrylic" is a concept that encompasses both acrylic and methacrylic.

An active energy ray curable type ink jet ink according to a first embodiment of the present disclosure (which is hereinafter referred to simply as an "ink") contains a bifunctional (meth)acrylate having a linear or branched alkylene group having 4 to 10 carbon atoms, a silicone-based surfactant having a (meth)acryloyl group, a coloring agent, and an acrylic resin having a glass transition temperature of 30°C or higher. The content of the bifunctional (meth)acrylate with respect to the total mass of the active energy ray curable type ink jet ink is 20% by mass or more.

An image recorded article can be obtained, for example, by applying the ink according to the first embodiment of the disclosure to a substrate and then irradiating the ink with active energy rays. Specifically, in the image recorded article obtained, an ink film serving as the image is formed on the substrate. The ink according to the first embodiment of the disclosure contains the bifunctional (meth)acrylate having a linear or branched alkylene group having 4 to 10 carbon atoms and the silicone-based surfactant having a (meth)acryloyl group. Therefore, a polymerization reaction proceeds by irradiation with the active energy rays. In particular, since the ink contains the silicone-based surfactant having a (meth) acryloyl group, the ink film formed by the polymerization reaction is considered to have a surface-active ability. For

example, when an image recorded article is immersed in a treatment solution (such as an alkali aqueous solution), the adhesiveness between the substrate and the ink film decreases, and the ink film is separated from the substrate. Since the ink film formed using the ink according to the first embodiment of the disclosure has the surface-active ability, the ink film is easily separated from the substrate and allowed to float, so that the separability of the ink film is good. In this manner, the substrate from which the image has been separated can be collected and, for example, reused.

The ink according to the first embodiment of the disclosure contains the acrylic resin having a glass transition temperature of 30°C or higher. This may be the reason that the hardness of the surface of the ink film is high and good rubfastness is obtained.

In JP2018-035369A, it is not assumed that the content of the bifunctional (meth)acrylate having a linear or branched alkylene group having 4 to 10 carbon atoms with respect to the total mass of the ink is set to 20% by mass or more.

The components contained in the ink according to the first embodiment of the disclosure will be described.

[Active energy ray curable type ink jet ink]

The ink according to the first embodiment of the disclosure is an active energy ray curable type ink. Specifically, the ink according to the first embodiment of the disclosure is cured when irradiated with active energy rays. Examples of the active energy rays include $\gamma$ rays, $\beta$ rays, electron beams, UV rays, and visible light. In particular, the active energy rays are preferably UV rays. The ink according to the first embodiment of the disclosure is preferably a UV curable type ink.

<Bifunctional (meth)acrylate having linear or branched alkylene group having 4 to 10 carbon atoms>

The ink according to the first embodiment of the disclosure contains the bifunctional (meth)acrylate having a linear or branched alkylene group having 4 to 10 carbon atoms (which is hereinafter referred to also as a "specific bifunctional (meth)acrylate").

The bifunctional (meth)acrylate means a compound having two (meth)acryloyloxy groups.

The specific bifunctional (meth)acrylate has a linear or branched alkylene group, and the number of carbon atoms in the alkylene group is 4 to 10. Therefore, the rubfastness of images to be obtained is good.

Examples of the linear or branched alkylene group include a methylene group, an ethylene group, an i-propylene group, a n-butylene group, a t-butylene group, and a heptylene group. From the above-described point of view, the number of carbon atoms in the linear or branched alkylene group is preferably 6 to 8 and more preferably 6.

The ink may contain only one specific bifunctional (meth)acrylate or two or more specific bifunctional (meth) acrylates.

Examples of the specific bifunctional (meth)acrylate include 3-methyl-1,5-pentanediol di(meth)acrylate, neopentyl glycol di(meth)acrylate, 1,6-hexanediol diacrylate, 1,7-heptanediol diacrylate, 1,8-octanediol diacrylate, and 1,9-nonanediol di(meth)acrylate.

In particular, from the viewpoint of the jettability, the specific bifunctional (meth)acrylate is preferably at least one selected from the group consisting of 3-methyl-1,5-pentanediol di(meth)acrylate and 1,6-hexanediol diacrylate and more preferably 3-methyl-1,5-pentanediol di(meth)acrylate.

From the viewpoint of rubfastness and odor, the content of the specific bifunctional (meth)acrylate with respect to the total amount of the ink is preferably 20% by mass or more, more preferably 20% by mass to 80% by mass, and still more preferably 30% by mass to 50% by mass.

<Monofunctional (meth)acrylate having hydroxy group>

Preferably, the ink according to the first embodiment of the disclosure contains the monofunctional (meth) acrylate having a hydroxy group (which is hereinafter referred to also as a "specific monofunctional (meth)acrylate").

The monofunctional (meth)acrylate means a compound having one (meth)acryloyloxy group.

The specific monofunctional (meth)acrylate plays a role in suppressing local accumulation of water in the ink film and improving the water resistance due to the presence of the hydroxy group. When the specific monofunctional (meth) acrylate is present, the concentration of oxygen in the ink is reduced, and inhibition of polymerization by oxygen is suppressed, so that the curability of the ink is improved. As a result, the amount of unreacted polymerizable compounds can be reduced, and the odor can be reduced.

The ink may contain only one specific monofunctional (meth)acrylate or two or more specific monofunctional (meth)acrylates.

No particular limitation is imposed on the number of hydroxy groups contained in the specific monofunctional (meth)acrylate, and the number of hydroxy groups is, for example, 1 to 6. From the viewpoint of the viscosity of the ink, the number of hydroxy groups is preferably 1 to 3 and more preferably 1 or 2.

From the viewpoint of ensuring low odor and low viscosity, the molecular weight of the specific monofunctional (meth)acrylate is preferably 130 to 150.

Examples of the specific monofunctional (meth)acrylate include 2-hydroxyethyl (meth)acrylate, 3-hydroxypropyl (meth)acrylate, 2-hydroxypropyl (meth)acrylate, 2-hydroxybutyl (meth)acrylate, 3-hydroxybutyl (meth)acrylate, and 4-hydroxybutyl (meth)acrylate. In particular, the specific monofunctional (meth)acrylate is preferably 4-hydroxybutyl (meth) acrylate from the viewpoint of ensuring water resistance and low odor.

From the viewpoint of ensuring water resistance and low odor, the content of the specific monofunctional (meth) acrylate with respect to the total amount of the ink is preferably 30% by mass to 70% by mass and more preferably 40% by mass to 50% by mass.

<Additional polymerizable compound>

The ink according to the first embodiment of the disclosure may contain an additional polymerizable compound other than the specific bifunctional (meth)acrylate and the specific monofunctional (meth)acrylate so long as the effects of the disclosure are not significantly impaired.

No particular limitation is imposed on the additional polymerizable compound so long as it is a compound that has a polymerizable group and is other than the specific bifunctional (meth)acrylate and the specific monofunctional (meth) acrylate.

From the viewpoint of reactivity with the specific bifunctional (meth)acrylate, the polymerizable group in the additional polymerizable compound is preferably a radically polymerizable group, more preferably an ethylenically unsaturated group, and still more preferably a (meth)acryloyloxy group. Specifically, the additional polymerizable compound is preferably a radically polymerizable compound, more preferably an ethylenically unsaturated compound, and still more preferably a (meth)acrylate compound.

The additional polymerizable compound may be a monofunctional polymerizable compound having one polymerizable group or a polyfunctional polymerizable compound having two or more polymerizable groups.

- Monofunctional polymerizable compound -

Examples of the monofunctional polymerizable compound include monofunctional (meth)acrylates, monofunctional (meth)acrylamides, monofunctional aromatic vinyl compounds, monofunctional vinyl ethers, and monofunctional N-vinyl compounds.

Examples of the monofunctional (meth)acrylate include methyl (meth)acrylate, ethyl (meth)acrylate, propyl (meth)acrylate, n-butyl (meth)acrylate, hexyl (meth)acrylate, 2-ethylhexyl (meth)acrylate, tert-octyl (meth)acrylate, isoamyl (meth)acrylate, decyl (meth)acrylate, isodecyl (meth)acrylate, lauryl (meth)acrylate, stearyl (meth)acrylate, isostearyl (meth)acrylate, cyclohexyl (meth)acrylate, 4-n-butylcyclohexyl (meth)acrylate, 4-tert-butylcyclohexyl (meth)acrylate, bornyl (meth)acrylate, isobornyl (meth)acrylate, 2-ethylhexyl diglycol (meth)acrylate, butoxyethyl (meth)acrylate, 2-chloroethyl (meth)acrylate, 4-bromobutyl (meth)acrylate, cyanoethyl (meth)acrylate, benzyl (meth)acrylate, butoxymethyl (meth)acrylate, 3-methoxybutyl (meth)acrylate, 2-(2-methoxyethoxy)ethyl (meth)acrylate, 2-(2-butoxyethoxy) ethyl (meth)acrylate, 2,2,2-tetrafluoroethyl (meth)acrylate, 1H,1H,2H,2H-perfluorodecyl (meth)acrylate, 4-butylphenyl (meth)acrylate, phenyl (meth)acrylate, 2,4,5-tetramethylphenyl (meth)acrylate, 4-chlorophenyl (meth)acrylate, 2-phenoxymethyl (meth)acrylate, 2-phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, cyclic trimethylolpropane formal (meth)acrylate, phenyl glycidyl ether (meth)acrylate, dimethylaminoethyl (meth)acrylate, diethylaminoethyl (meth)acrylate, dimethylaminopropyl (meth)acrylate, diethylaminopropyl (meth)acrylate, trimethoxysilylpropyl (meth)acrylate, trimethylsilylpropyl (meth)acrylate, polyethylene oxide monomethyl ether (meth)acrylate, polyethylene oxide (meth)acrylate, polyethylene oxide monoalkyl ether (meth)acrylate, dipropylene glycol (meth)acrylate, polypropylene oxide monoalkyl ether (meth)acrylate, 2-methacryloyloxyethyl succinate, 2-methacryloyloxyhexahydrophthalic acid, ethoxydiethylene glycol (meth)acrylate, butoxydiethylene glycol (meth)acrylate, trifluoroethyl (meth)acrylate, perfluorooctyl ethyl (meth)acrylate, ethylene oxide (EO)-modified phenol (meth)acrylate, EO-modified cresol (meth)acrylate, EO-modified nonylphenol (meth)acrylate, propylene oxide (PO)-modified nonylphenol (meth)acrylate, EO-modified -2-ethylhexyl (meth)acrylate, dicyclopentenyl (meth)acrylate, dicyclopentenyloxyethyl (meth)acrylate, dicyclopentanyl (meth)acrylate, (3-ethyl-3-oxetanylmethyl) (meth)acrylate, phenoxyethylene glycol (meth)acrylate, 2-carboxyethyl (meth)acrylate, and 2-(meth)acryloyloxyethyl succinate.

Examples of the monofunctional (meth)acrylamide include (meth)acrylamide, N-methyl (meth)acrylamide, N-ethyl (meth)acrylamide, N-propyl (meth)acrylamide, N-n-butyl (meth)acrylamide, N-t-butyl (meth)acrylamide, N-butoxymethyl (meth)acrylamide, N-isopropyl (meth)acrylamide, N-methylol (meth)acrylamide, N,N-dimethyl (meth)acrylamide, N,N-diethyl (meth)acrylamide, and (meth)acryloylmorpholine.

Examples of the monofunctional aromatic vinyl compound include styrene, dimethylstyrene, trimethylstyrene,

isopropylstyrene, chloromethylstyrene, methoxystyrene, acetoxystyrene, chlorostyrene, dichlorostyrene, bromostyrene, methyl vinyl benzoate, 3-methylstyrene, 4-methylstyrene, 3-ethylstyrene, 4-ethylstyrene, 3-propylstyrene, 4-propylstyrene, 3-butylstyrene, 4-butylstyrene, 3-hexylstyrene, 4-hexylstyrene, 3-octylstyrene, 4-octylstyrene, 3-(2-ethylhexyl)styrene, 4-(2-ethylhexyl)styrene, allylstyrene, isopropenylstyrene, butenylstyrene, octenylstyrene, 4-t-butoxycarbonylstyrene, and 4-t-butoxystyrene.

Examples of the monofunctional vinyl ether include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxy ethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethyl cyclohexyl methyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, and phenoxypolyethylene glycol vinyl ether.

Examples of the monofunctional N-vinyl compound include N-vinyl-ε-caprolactam and N-vinylpyrrolidone.

- Polyfunctional polymerizable compound -

Examples of the polyfunctional polymerizable compound include polyfunctional (meth)acrylate compounds and polyfunctional vinyl ethers.

Examples of the polyfunctional (meth)acrylate include ethylene glycol di(meth)acrylate, diethylene glycol di(meth)acrylate, triethylene glycol di(meth)acrylate, polyethylene glycol di(meth)acrylate, propylene glycol di(meth) acrylate, dipropylene glycol di(meth)acrylate, tripropylene glycol di(meth)acrylate, polypropylene glycol di(meth)acrylate, butylene glycol di(meth)acrylate, tetraethylene glycol di(meth)acrylate, EO-modified neopentyl glycol di(meth)acrylate, PO-modified neopentyl glycol di(meth)acrylate, EO-modified hexanediol di(meth)acrylate, PO-modified hexanediol di(meth)acrylate, decanediol di(meth)acrylate, dodecanediol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, tricyclodecane dimethanol di(meth)acrylate, trimethylolethane tri(meth)acrylate, trimethylolpropane tri(meth)acrylate, trimethylolpropane EO-added tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, tri(meth)acryloyloxy ethoxytrimethylolpropane, glycerin polyglycidyl ether poly(meth)acrylate, and tris(2-acryloyloxyethyl)isocyanurate.

Examples of the polyfunctional vinyl ether include 1,4-butanediol divinyl ether, ethylene glycol divinyl ether, diethylene glycol divinyl ether, triethylene glycol divinyl ether, polyethylene glycol divinyl ether, propylene glycol divinyl ether, butylene glycol divinyl ether, hexanediol divinyl ether, 1,4-cyclohexanedimethanol divinyl ether, bisphenol A alkylene oxide divinyl ether, bisphenol F alkylene oxide divinyl ether, trimethylolethane trivinyl ether, trimethylolpropane trivinyl ether, ditrimethylolpropane tetravinyl ether, glycerin trivinyl ether, pentaerythritol tetravinyl ether, dipentaerythritol pentavinyl ether, dipentaerythritol hexavinyl ether, EO-added trimethylolpropane trivinyl ether, PO-added trimethylolpropane trivinyl ether, EO-added ditrimethylolpropane tetravinyl ether, PO-added ditrimethylolpropane tetravinyl ether, EO-added pentaerythritol tetravinyl ether, PO-added pentaerythritol tetravinyl ether, EO-added dipentaerythritol hexavinyl ether, and PO-added dipentaerythritol hexavinyl ether.

<Coloring agent>

The ink according to the first embodiment of the disclosure contains at least one coloring agent.

In the present disclosure, the coloring agent is a material that, when added to an ink, can convert the ink to a chromatic or achromatic color ink.

The coloring agent may be a chromatic coloring material (such as a cyan, magenta, or yellow coloring material) or an achromatic coloring material (such as a white or black coloring material).

Examples of the coloring agent include dyes and pigments. From the viewpoint of durability such as heat resistance, light resistance, and water resistance, the coloring agent is preferably a pigment.

When the coloring agent used is a pigment, the pigment may be contained as a pigment dispersion in the ink. The pigment dispersion is a liquid obtained by dispersing the pigment in a liquid medium using a dispersing agent and contains at least the pigment, the dispersing agent, and the liquid medium. The details of the dispersing agent will be described later. The liquid medium may be an organic solvent or may be a polymerizable compound.

The pigment used may be any commercially available organic or inorganic pigment. Examples of the pigment include pigments described in "Ganryo no Jiten (Dictionary of Pigments)" ed. by Seishiro Ito (2000), W. Herbst and K. Hunger "Industrial Organic Pigments," JP2002-12607A, JP2002-188025A, JP2003-26978A, and JP2003-342503A.

The content of the coloring agent with respect to the total amount of the ink is preferably 0.5% by mass to 15% by

mass, more preferably 1% by mass to 10% by mass, and still more preferably 2% by mass to 5% by mass.

<Dispersing agent>

When the coloring agent used is a pigment, the pigment may be contained as a pigment dispersion in the ink. The pigment can be dispersed in the liquid medium using a dispersing agent. Any well-known dispersing agent may be used. From the viewpoint of dispersion stability, the dispersing agent is preferably a compound having both a hydrophilic structure and a hydrophobic structure.

Examples of the dispersing agent include low-molecular weight dispersing agents having a molecular weight of less than 1000 such as higher fatty acid salts, alkyl sulfates, alkyl ester sulfates, alkyl sulfonates, sulfosuccinates, naphthalenesulfonates, alkyl phosphates, polyoxyalkylene alkyl ether phosphates, polyoxyalkylene alkyl phenyl ethers, polyoxyethylene polyoxypropylene glycols, glycerin fatty acid esters, sorbitan fatty acid esters, polyoxyethylene fatty acid amides, and amine oxides.

Other examples of the dispersing agent include a high-molecular weight dispersing agent having a molecular weight of 1000 or more and obtained by copolymerizing a hydrophilic monomer and a hydrophobic monomer. From the viewpoint of dispersion stability, the hydrophilic monomer is preferably a dissociable group-containing monomer and preferably a dissociable group-containing monomer having a dissociable group and an ethylenically unsaturated bond. Examples of the dissociable group-containing monomer include carboxy group-containing monomers, sulfonic acid group-containing monomers, and phosphate group-containing monomers. From the viewpoint of dispersion stability, the hydrophobic monomer is preferably an aromatic group-containing monomer having an aromatic group and an ethylenically unsaturated bond or an aliphatic hydrocarbon group-containing monomer having an aliphatic hydrocarbon group and an ethylenically unsaturated bond. The polymer may be a random copolymer or may be a block copolymer.

The dispersing agent may be a commercial product. Examples of the commercial product include:

DISPERBYK-101, DISPERBYK-102, DISPERBYK-103, DISPERBYK-106, DISPERBYK-110, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK-Chemie); and

SOLSPERSE 3000, SOLSPERSE 5000, SOLSPERSE 9000, SOLSPERSE 12000, SOLSPERSE 13240, SOLSPERSE 13940, SOLSPERSE 17000, SOLSPERSE 22000, SOLSPERSE 24000, SOLSPERSE 26000, SOLSPERSE 28000, SOLSPERSE 32000, SOLSPERSE 36000, SOLSPERSE 39000, SOLSPERSE 41000, and SOLSPERSE 71000 (manufactured by Lubrizol).

A dispersing device used to disperse the pigment may be any well-known dispersing device, and examples thereof include a ball mill, a sand mill, a bead mill, a roll mill, a jet mill, a paint shaker, an attritor, an ultrasonic disperser, and a disperser.

From the viewpoint of dispersion stability, the mass ratio of the dispersing agent with respect to the mass of the pigment in the ink is preferably 0.05 to 1.0 and more preferably 0.1 to 0.5.

<Silicone-based surfactant having (meth)acryloyl group>

The ink according to the first embodiment of the disclosure contains at least one silicone-based surfactant having a (meth)acryloyl group.

When the ink contains the silicone-based surfactant having a (meth)acryloyl group, an ink film to be formed has a surface-active ability. For example, when the image recorded article is immersed in a treatment solution (such as an alkali aqueous solution), the adhesiveness between the substrate and the ink film decreases, and the ink film is separated from the substrate. Since the ink film has a surface-active ability, the ink film separated from the substrate is easily allowed to float, and therefore the separability of the ink film is good.

The silicone-based surfactant having a (meth)acryloyl group may have only one (meth)acryloyl group or may have two or more (meth)acryloyl groups.

From the viewpoint of separability, the number of (meth)acryloyl groups is preferably 2 or more and more preferably 3 or more. No particular limitation is imposed on the upper limit of the number of (meth)acryloyl groups. However, from the viewpoint of jettability, the number of (meth)acryloyl groups is, for example, 5.

The silicone-based surfactant having a (meth)acryloyl group is preferably a polyether-modified polydimethylsiloxane having a (meth)acryloyl group. No particular limitation is imposed on the position of the polyether chain in the polyether-modified polydimethylsiloxane having a (meth)acryloyl group. One polyether chain may be located at one terminal of the main chain, or two polyether chains may be located at both the terminals of the main chain. Alternatively, a side chain may be a polyether chain. The polyether chain is preferably a polyoxyalkylene chain.

Examples of a commercial product of the silicone-based surfactant having a (meth)acryloyl group include: BYK-UV3500, 3505, 3530, 3570, 3575, and 3576 (manufactured by BYK); Tegorad 2100, 2200, 2250, 2300, 2500, 2600, 2700, 2800, 2010, and 2011 (manufactured by EVONIK); EBECRYL 350 and 1360 (manufactured by DAICEL-ALLNEX LTD.); and KP-410, 411, 412, 413, 414, 415, 416, 418, 420, 422, and 423 (manufactured by Shin-Etsu Silicone).

From the viewpoint of separability, it is preferable that the silicone-based surfactant having a (meth)acryloyl group includes a polyether structure and a polysiloxane structure, and the ratio of the content mass of the polysiloxane structure to the content mass of the polyether structure is preferably 0.5 or more and more preferably 0.6 or more. The upper limit of the above mass ratio is, for example, 0.95.

The ratio of the content mass of the polysiloxane structure to the content mass of the polyether structure can be computed by nuclear magnetic resonance spectrometry (nuclear magnetic resonance; $^1$H-NMR).

From the viewpoint of separability, the content of the silicone-based surfactant having a (meth)acryloyl group with respect to the total mass of the ink is preferably 0.5% by mass to 10% by mass and more preferably 4% by mass to 7% by mass.

<Acrylic resin having glass transition temperature of 30°C or higher>

The ink according to the first embodiment of the disclosure contains at least one acrylic resin having a glass transition temperature of 30°C or higher (which is hereinafter referred to also as a "specific acrylic resin").

In the present disclosure, the acrylic resin means a resin including at least one of a structural unit derived from (meth)acrylic acid or a structural unit derived from a (meth)acrylate.

When the ink contains the specific acrylic resin, the hardness of the surface of the ink film is high, and this may be the reason that the rubfastness is high.

From the viewpoint of further improving the rubfastness, the glass transition temperature of the specific acrylic resin is preferably 35°C or higher and more preferably 65°C or higher. No particular limitation is imposed on the upper limit of the glass transition temperature. From the viewpoint of jettability, the glass transition temperature is preferably 140°C or lower and more preferably 100°C or lower.

In the present disclosure, the glass transition temperature of the specific acrylic resin means a value measured by differential scanning calorimetry (DSC). The differential scanning calorimeter (DSC) used is, for example, EXSTAR6 220 (manufactured by SII NanoTechnology Inc.).

When the ink contains two or more specific acrylic resins, the glass transition temperature (Tg) means the weighted average of the glass transition temperatures of the acrylic resins.

From the viewpoint of rubfastness, the weight average molecular weight of the specific acrylic resin is preferably 5,000 to 100,0000 and more preferably 10,000 to 50,000.

In the present disclosure, the weight average molecular weight is measured using a gel permeation chromatograph (GPC). The GPC used is HLC-8220GPC (manufactured by TOSOH Corporation). The columns used are three TSKgel Super AWM-H columns (manufactured by TOSOH Corporation, 6.0 mm I.D. × 15 cm), and the eluant used is N-methylpyrrolidone (10 mM of LiBr is added thereto). The measurement conditions are as follows. The sample concentration is 0.1% by mass, and the flow rate is 0.5 mL/min. The injection amount of the sample is 60 μL, and the measurement temperature is 40°C. The detection is performed using a differential refractive index (RI) detector. A calibration curve is produced using 8 standard samples including "n-propylbenzene" and "TSK standard polystyrenes (product name)" manufactured by TOSOH Corporation: "F-40," "F-20," "F-4," "F-1," "A-5000," "A-2500," and "A-1000."

From the viewpoint of adjusting the glass transition temperature to 30°C or higher, the specific acrylic resin includes preferably a structural unit derived from at least one selected from the group consisting of a linear or branched aliphatic hydrocarbon group-containing (meth)acrylate and an alicyclic hydrocarbon group-containing (meth)acrylate and includes more preferably a structural unit derived from a linear or branched aliphatic hydrocarbon group-containing (meth) acrylate and a structural unit derived from an alicyclic hydrocarbon group-containing (meth)acrylate.

Examples of the linear or branched aliphatic hydrocarbon group-containing (meth)acrylate include methyl (meth) acrylate, ethyl (meth)acrylate, n-propyl (meth)acrylate, i-propyl (meth)acrylate, n-butyl (meth)acrylate, i-butyl (meth) acrylate, t-butyl (meth)acrylate, n-amyl (meth)acrylate, i-amyl (meth)acrylate, 2-ethylhexyl (meth)acrylate, n-octyl (meth) acrylate, i-octyl (meth)acrylate, decyl (meth)acrylate, i-decyl (meth)acrylate, lauryl (meth)acrylate, i-dodecyl (meth) acrylate, stearyl (meth)acrylate, i-stearyl (meth)acrylate, and behenyl (meth)acrylate.

Examples of the alicyclic hydrocarbon group-containing (meth)acrylate include cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, cyclononyl (meth)acrylate, cyclodecyl (meth)acrylate, isobornyl (meth)acrylate, norbornyl (meth)acrylate, and adamantyl(meth)acrylate.

The ratio of the content mass of the silicone-based surfactant having a (meth)acryloyl group to the content mass of the specific acrylic resin is preferably 1 to 10 and more preferably 4 to 7. When the content mass ratio is 1 or more, the jettability is improved. When the content mass ratio is 10 or less, the rubfastness is improved.

From the viewpoint of rubfastness, the content of the specific acrylic resin with respect to the total mass of the ink is preferably 0.2% by mass to 3% by mass and more preferably 0.5% by mass to 1.5% by mass.

<Polymerization initiator>

The ink according to the first embodiment of the disclosure may contain at least one polymerization initiator. The polymerization initiator is preferably a radical polymerization initiator that generates radicals.

Examples of the radical polymerization initiator include alkylphenone compounds, acylphosphine compounds, aromatic onium salt compounds, organic peroxides, thio compounds, hexaarylbiimidazole compounds, ketoxime ester compounds, borate compounds, azinium compounds, metallocene compounds, active ester compounds, compounds having a carbon-halogen bond, and alkylamine compounds.

In particular, the polymerization initiator is preferably at least one selected from the group consisting of acylphosphine compounds and thio compounds, more preferably at least one selected from the group consisting of acylphosphine oxide compounds and thioxanthone compounds, and still more preferably a combination of an acylphosphine oxide compound and a thioxanthone compound.

Examples of the acylphosphine oxide compound include monoacylphosphine oxide compounds and bisacylphosphine oxide compounds.

Examples of the monoacylphosphine oxide compound include isobutyryldiphenylphosphine oxide, 2-ethylhexanoyldiphenylphosphine oxide, 2,4,6-trimethylbenzoyldiphenylphosphine oxide, (2,4,6-trimethylbenzoyl)ethoxyphenylphosphine oxide, o-toluyldiphenylphosphine oxide, p-t-butylbenzoyldiphenylphosphine oxide, 3-pyridylcarbonyldiphenylphosphine oxide, acryloyldiphenylphosphine oxide, benzoyldiphenylphosphine oxide, pivaloylphenylphosphinic acid vinyl ester, adipoylbisdiphenylphosphine oxide, pivaloyldiphenylphosphine oxide, p-toluyldiphenylphosphine oxide, 4-(t-butyl)benzoyldiphenylphosphine oxide, terephthaloylbisdiphenylphosphine oxide, 2-methylbenzoyldiphenylphosphine oxide, versatoyldiphenylphosphine oxide, 2-methyl-2-ethylhexanoyldiphenylphosphine oxide, 1-methyl-cyclohexanoyldiphenylphosphine oxide, pivaloylphenylphosphinic acid methyl ester, and pivaloylphenylphosphinic acid isopropyl ester.

Examples of the bisacylphosphine oxide compound include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, phenylbis(2,4,6-trimethylbenzoyl)phosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Examples of the thioxanthone compound include thioxanthone, 2-isopropylthioxanthone, 4-isopropylthioxanthone, 2-chlorothioxanthone, 2,4-dichlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, n-allylthioxanthone-3,4-dicarboximide, n-octylthioxanthone-3,4-dicarboximide, N-(1,1,3,3-tetramethylbutyl)thioxanthone-3,4-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthon-2-yloxy)-N,N,N-trimethyl-1-propanaminium chloride.

The thioxanthone compound may be a commercial product. Examples of the commercial product include the SPEEDCURE series (such as SPEEDCURE 7010, SPEEDCURE CPTX, and SPEEDCURE ITX) manufactured by Lambson.

From the viewpoint of further reducing the odor, it is preferable that the ink according to the first embodiment of the disclosure contains, as a polymerization initiator, at least one selected from the group consisting of phenylbis(2,4,6-trimethylbenzoyl)phosphine oxide and (2,4,6-trimethylbenzoyl)ethoxyphenylphosphine oxide, and it is more preferable that the ink contains, as polymerization initiators, phenylbis(2,4,6-trimethylbenzoyl)phosphine oxide and (2,4,6-trimethylbenzoyl)ethoxyphenylphosphine oxide.

From the viewpoint of further reducing the odor, the total content of at least one selected from the group consisting of phenylbis(2,4,6-trimethylbenzoyl)phosphine oxide and (2,4,6-trimethylbenzoyl)ethoxyphenylphosphine oxide (preferably the total content of phenylbis(2,4,6-trimethylbenzoyl)phosphine oxide and (2,4,6-trimethylbenzoyl)ethoxyphenylphosphine oxide with respect to the total amount of the ink is preferably 3.5% by mass or more and more preferably 5% by mass or more. No particular limitation is imposed on the upper limit of the total content, but the upper limit is, for example, 10% by mass.

From the viewpoint of further reducing the odor, it is preferable that the ink according to the first embodiment of the disclosure contains, as a polymerization initiator, a compound having two or more thioxanthone skeletons in its molecule.

The content of the compound having two or more thioxanthone skeletons in its molecule with respect to the total amount of the ink is preferably 1% by mass to 10% by mass and more preferably 2% by mass to 8% by mass.

<Polymerization inhibitor>

Preferably, the ink according to the first embodiment of the disclosure contains at least one polymerization inhibitor.

Examples of the polymerization inhibitor include hydroquinone compounds, phenothiazine, catechol, alkylphenols, alkylbisphenols, zinc dimethyldithiocarbamate, copper dimethyldithiocarbamate, copper dibutyldithiocarbamate, copper salicylate, thiodipropionates, mercaptobenzimidazole, phosphites, nitrosamine compounds, hindered amine compounds, and nitroxyl radicals.

In particular, the polymerization inhibitor is more preferably a nitrosamine compound.

Examples of the nitrosamine compound include an N-nitroso-N-phenylhydroxylamine aluminum salt and N-nitroso-N-phenylhydroxylamine. In particular, the nitrosamine compound is preferably an N-nitroso-N-phenylhydroxylamine aluminum salt.

From the viewpoint of improving the temporal stability of the ink, the content of the polymerization inhibitor with respect to the total amount of the ink is preferably 0.05% by mass to 1% by mass.

<Additives>

The ink according to the first embodiment of the disclosure may optionally contain additives such as a cosensitizer, an ultraviolet absorbent, an antioxidant, a fading inhibitor, an electroconductive salt, a solvent, and a basic compound.

<Physical properties>

The viscosity of the ink is preferably 0.5 mPa·s to 50 mPa·s, more preferably 5 mPa·s to 40 mPa·s, still more preferably 7 mPa·s to 35 mPa·s, and yet more preferably 8 mPa·s to 30 mPa·s. The varicosity is measured at 25°C using a viscometer and is measured using, for example, a TV-22 type viscometer manufactured by Toki Sangyo Co., Ltd.

The surface tension of the ink is preferably 60 mN/m or less, more preferably 20 mN/m to 50 mN/m, and still more preferably 25 mN/m to 45 mN/m. The surface tension is measured at 25°C using a surface tensiometer. For example, the surface tension is measured by a plate method using an automatic surface tensiometer (product name: "CBVP-Z") manufactured by Kyowa Interface Science Co., Ltd.

[Active energy ray curable type ink set]

An ink set according to a second embodiment of the disclosure includes a first ink and a second ink.

The first ink is one mode of the ink according to the first embodiment of the disclosure, and the coloring agent is a pigment different from a white pigment.

The second ink is another mode of the ink according to the first embodiment of the disclosure, and the coloring agent is a white pigment.

Preferred modes of the first and second inks are the same as the preferred modes of the ink according to the first embodiment of the disclosure except for the features described below.

Examples of the pigment different from a white pigment include cyan pigments, magenta pigments, yellow pigments, and black pigments.

Examples of the white pigment include titanium dioxide, barium sulfate, calcium carbonate, silica, zinc oxide, zinc sulfide, mica, talc, and pearl.

From the viewpoint of hiding power, the average primary particle diameter of the white pigment is preferably 150 nm or more and more preferably 200 nm or more. From the viewpoint of the jettability of the ink, the average primary particle diameter of the white pigment is preferably 400 nm or less and more preferably 350 nm or less. The average primary

particle diameter of the white pigment is preferably 150 nm to 400 nm.

In the present disclosure, the average primary particle diameter of the white pigment is a value measured using a transmission electron microscope (TEM). Specifically, 50 white pigment particles present in a viewing field observed under the TEM are selected, and the primary particle diameters of the 50 particles are measured and averaged to obtain the average primary particle diameter. The transmission electron microscope used may be a transmission electron microscope 1200EX manufactured by JEOL Ltd.

Provided that the mass of the first ink is the same as the mass of the second ink, the content of the specific acrylic resin in the first ink is preferably larger than the content of the specific acrylic resin in the second ink, from the viewpoint of improving water resistance.

Specifically, the ratio of the content mass of the specific acrylic resin in the first ink to the content mass of the specific acrylic resin in the second ink is preferably 2 or more and more preferably 5 or more. The upper limit of the content mass ratio is, for example, 15.

The content of the specific acrylic resin in the first ink with respect to the total mass of the first ink is preferably 0.2% by mass to 3% by mass and more preferably 0.5% by mass to 1.5% by mass.

The content of the specific acrylic resin in the second ink with respect to the total mass of the second ink is preferably 0.1% by mass to 1% by mass and more preferably 0.3% by mass to 1% by mass.

Preferably, the ink set according to the second embodiment of the disclosure further includes, in addition to the first and second inks, a third ink containing at least one acid group-containing compound selected from the group consisting of acid group-containing polymerizable monomers and acid group-containing polymers.

<Acid group-containing compound>

When the acid group reacts with an alkali to form a salt, the water solubility of the ink increases. Therefore, it is preferable that the third ink is applied directly to a substrate. Since the third ink contains the acid group-containing compound, alkali peelability is improved.

Examples of the acid group in the acid group-containing compound include a carboxy group, a sulfo group, a phosphonic acid group, a phosphoric acid group, and a sulfonamido group.

- Acid group-containing polymerizable monomer -

In the present disclosure, the term "monomer" means a compound having a molecular weight of less than 1000. The term "polymerizable monomer" means a compound having a molecular weight of less than 1000 and having a polymerizable group. The molecular weight of a monomer can be computed based on the types and numbers of atoms forming the monomer.

Examples of the polymerizable monomer having a carboxy group include 2-(meth)acryloyloxyethylsuccinic acid, 2-(meth)acryloyloxyethyl phthalic acid, 2-(meth)acryloyloxyethylhexahydrophthalic acid, 2-(meth)acryloyloxypropylphthalic acid, 2-(meth)acryloyloxypropylhexahydrophthalic acid, 2-carboxyethyl (meth)acrylate, and (meth)acrylic acid.

Examples of the polymerizable monomer having a sulfo group include 2-hydroxy-3-sulfopropyl (meth)acrylate, 2-(meth)acrylamide-2-methylpropane sulfonic acid, 2-sulfoethyl (meth)acrylate, 3-sulfopropyl (meth)acrylate, and 4-styrene sulfonic acid.

Examples of the polymerizable monomer having a phosphoric acid group include 2-phosphonooxyethyl (meth) acrylate and 2-(meth)acryloyloxyethyl acid phosphate.

In particular, from the viewpoint of improving the alkali peelability and ensuring safety and low viscosity, the acid group-containing polymerizable monomer is preferably a polymerizable monomer having a carboxy group.

The acid group-containing polymerizable monomer may be a monofunctional polymerizable monomer having an acid group or a polyfunctional polymerizable monomer having an acid group. From the viewpoint of improving the alkali peelability and ensuring safety and low viscosity, the acid group-containing polymerizable monomer is preferably a monofunctional polymerizable monomer having an acid group, more preferably a monofunctional polymerizable monomer having a carboxy group, and still more preferably a monofunctional (meth)acrylate having a carboxy group.

- Acid group-containing polymer -

In the present disclosure, the term "polymer" means a compound having a weight average molecular weight of 1000 or more.

Examples of the acid group-containing polymer include (meth)acrylic-based copolymers, polyurethanes, polyvinyl alcohols, polyvinyl butyrals, polyvinyl formals, polyamides, polyesters, and epoxy resins. In particular, the acid group-containing polymer is preferably a (meth)acrylic-based copolymer, polyurethane, or polyvinyl butyral.

In the present disclosure, the term "(meth)acrylic-based copolymer" refers to a copolymer including, as a structural unit, a (meth)acrylic acid derivative such as (meth)acrylic acid, a (meth)acrylate (such as an alkyl (meth)acrylate, an aryl (meth)acrylate, or an allyl (meth)acrylate), (meth)acrylamide, or a (meth)acrylamide derivative. The term "polyurethane" refers to a polymer obtained by a condensation reaction of a polyfunctional isocyanate compound having two or more isocyanate groups and a polyhydric alcohol having two or more hydroxy groups. The term "polyvinyl butyral" refers to a polymer obtained by reacting a polyvinyl alcohol obtained by partial or complete saponification of polyvinyl acetate with butyraldehyde under acidic conditions. The term "polyvinyl butyral" encompasses a polymer having a functional group introduced into its molecule.

Preferably, the (meth)acrylic-based copolymer includes a structural unit having an acid group. In particular, the acid group is preferably a carboxy group. Examples of the structural unit having a carboxy group include a structural unit derived from (meth)acrylic acid and a structural unit derived from a structural unit represented by the following formula 1.

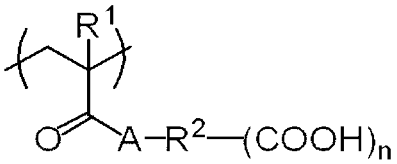

(1)

In formula (1), $R^1$ represents a hydrogen atom or a methyl group, and $R^2$ represents a single bond or an n+1 valent linking group. A represents an oxygen atom or $-NR^3-$, and $R^3$ represents a hydrogen atom or a monovalent hydrocarbon group having 1 to 10 carbon atoms. n represents an integer of 1 to 5.

For preferred modes and specific examples of the structural unit represented by formula (1) and preferred modes of structural units other than the structural unit represented by formula (1), reference can be made to JP4668111B and JP5588887B.

In particular, it is preferable that the acid group-containing polymer includes a structural unit derived from (meth) acrylic acid and a structural unit derived from an alkyl (meth)acrylate. The number of carbon atoms in the alkyl group included in the alkyl (meth)acrylate is preferably 1 to 10 and more preferably 1 to 6.

The weight average molecular weight of the acid group-containing polymer is preferably 1,000 to 1,000,000, more preferably 5,000 to 500,000, and still more preferably 10,000 to 200,000.

From the viewpoint of further improving the alkali peelability, the total content of the at least one acid group-containing compound with respect to the total amount of the third ink is preferably 8% by mass or more, more preferably 10% by mass or more, and still more preferably 14% by mass or more. The upper limit of the total content is, for example, 20% by mass.

<Bifunctional (meth)acrylate having linear or branched alkylene group having 4 to 10 carbon atoms>

Preferably, the third ink contains the specific bifunctional (meth)acrylate. Preferred modes of the specific bifunctional (meth)acrylate contained in the third ink are the same as the preferred modes of the specific bifunctional (meth)acrylate contained in the ink according to the first embodiment of the disclosure.

<Monofunctional (meth)acrylate having hydroxy group>

Preferably, the third ink contains the specific monofunctional (meth)acrylate. Preferred modes of the specific monofunctional (meth)acrylate contained in the third ink are the same as the preferred modes of the specific monofunctional (meth)acrylate that is optionally contained in the ink according to the first embodiment of the disclosure.

<Additional polymerizable compound>

The third ink may contain an additional polymerizable compound.

Examples of the additional polymerizable compound contained in the third ink are the same as those of the additional polymerizable compound contained in the ink according to the first embodiment of the disclosure.

<Acrylic resin having glass transition temperature of 30°C or higher>

Preferably, the third ink contains the specific acrylic resin. Preferred modes of the specific acrylic resin contained in the third ink are the same as the preferred modes of the specific acrylic resin contained in the ink according to the first embodiment of the disclosure.

Provided that the mass of the first ink, the mass of the second ink, and the mass of the third ink are the same, the

content (Mc) of the specific acrylic resin in the first ink is preferably larger than the content (Mw) of the specific acrylic resin in the second ink, and the content (Mc) of the specific acrylic resin in the first ink is preferably larger than the content (Mp) of the specific acrylic resin in the third ink. It is more preferable that the content of the specific acrylic resin in the second ink is larger than the content of the specific acrylic resin in the third ink.

In particular, it is preferable that $1 < Mc / Mw \leq 4$, and it is more preferable that $1.5 \leq Mc / Mw \leq 3$. It is preferable that $1 < Mc / Mp \leq 10$, and it is more preferable that $2 \leq Mc / Mp \leq 8$.

When, for example, the third ink, the second ink, and the first ink are applied in this order to a substrate, the ink film formed by the first ink is located on the outermost side. When the content of the acrylic resin in the first ink is larger than the contents of the specific acrylic resin in the second and third inks, the water resistance is improved.

<Polymerization initiator>

The third ink may contain at least one polymerization initiator.

Examples of the polymerization initiator contained in the third ink are the same as those of the polymerization initiator contained in the ink according to the first embodiment of the disclosure.

<Polymerization inhibitor>

Preferably, the third ink contains at least one polymerization inhibitor.

Examples of the polymerization inhibitor contained in the third ink are the same as those of the polymerization inhibitor contained in the ink according to the first embodiment of the disclosure.

From the viewpoint of improving the temporal stability of the third ink, the content of the polymerization inhibitor with respect to the total mass of the third ink is 0.05% by mass to 0.5% by mass.

<Surfactant>

Preferably, the third ink contains at least one surfactant.

Examples of the surfactant contained in the third ink are the same as those of the silicone-based surfactant having a (meth)acryloyl group contained in the ink according to the first embodiment of the disclosure.

<Additives>

The third ink may optionally contain additives such as a co-sensitizer, an ultraviolet absorbent, an antioxidant, a fading inhibitor, an electroconductive salt, a solvent, and a basic compound.

Preferably, the third ink contains no coloring agent. Preferably, the third ink serves as a primer for allowing an image recorded by the first and second inks to be peeled off by an alkali.

<Physical properties>

The viscosity of the third ink is preferably 0.5 mPa·s to 50 mPa·s, more preferably 5 mPa·s to 40 mPa·s, still more preferably 7 mPa·s to 35 mPa·s, and particularly preferably 8 mPa·s to 30 mPa·s.

The surface tension of the third ink is preferably 60 mN/m or less, more preferably 20 mN/m to 40 mN/m, and still more preferably 23 mN/m to 30 mN/m.

[Image recording method A]

An image recording method A according to a third embodiment of the disclosure includes the steps of: applying the ink (the ink according to the first embodiment of the disclosure) to a substrate using an ink jet recording method; and irradiating the applied ink with active energy rays.

(Step of applying ink using ink jet recording method)

No particular limitation is imposed on the type of substrate, and the substrate used may be any well-known substrate. Examples of the substrate include glass, quartz, and plastic films. Examples of the resin forming the plastic film include cellulose diacetate, cellulose triacetate, cellulose propionate, cellulose butyrate, cellulose acetate butyrate, cellulose nitrate, acrylic resins, chlorinated polyolefin resins, polyether sulfone resins, polyethylene terephthalate (PET), polyethylene naphthalate, nylon, polyethylene, polystyrene, polypropylene, polycycloolefin resins, polyimide resins, polycarbonate resins, and polyvinyl acetal. The plastic film may be a film containing only one of these resins or may be a

film formed of a mixture of two or more of these resins.

No particular limitation is imposed on the thickness of the substrate, and the thickness is, for example, 1 μm to 10 mm. When the substrate is a film, its thickness is preferably 1 μm to 500 μm, more preferably 2 μm to 200 μm, still more preferably 5 μm to 100 μm, and particularly preferably 10 μm to 90 μm. When the substrate is glass, its thickness is preferably 0.1 mm to 10 mm, more preferably 0.15 mm to 8 mm, and still more preferably 0.2 mm to 5 mm.

The substrate may be a beverage container.

No particular limitation is imposed on the material of the beverage container, and examples of the material include glass and plastics. In particular, the beverage container is preferably a plastic container and is preferably a PET bottle containing polyethylene terephthalate as a main component.

The substrate may be a plastic film to be applied to the surface of a beverage container. The substrate may be subjected to hydrophilization treatment. Examples of the hydrophilization treatment include, but are not limited to, corona treatment, plasma treatment, heat treatment, abrasion treatment, light irradiation treatment (such as UV treatment), and flame treatment. The corona treatment can be performed, for example, using Corona Master (product name: "PS-10S" manufactured by Shinko Electric & Instrumentation Co., Ltd.). The conditions for the corona treatment may be selected according to the type of substrate etc.

No particular limitation is imposed on the ink jet recording method so long as it is a method capable of recording an image, and any known method can be used. Examples of the ink jet recording method include: a charge control method in which an ink is jetted by utilizing electrostatic attraction force; a drop-on-demand method (pressure pulse method) that utilizes the vibration pressure of a piezoelectric element; an acoustic ink jet method including converting an electric signal to an acoustic beam, irradiating an ink with the acoustic beam, and jetting the ink by utilizing the radiation pressure; and a thermal ink jet (BUBBLEJET (registered trademark)) method including heating an ink to form air bubbles and utilizing the pressure generated.

Examples of the type of ink jet head used for the ink jet recording method include: a shuttle type in which a short serial head is used and the recording is performed while the head is moved in the width direction of the substrate; and a line type that uses a line head including recording elements arranged so as to cover the entire region of a side of the substrate.

With the line type, the substrate is moved in a direction intersecting the arrangement direction of the recording elements, so that a pattern can be formed over the entire substrate. Therefore, a transport system such as a carriage for moving a short head can be eliminated. With the line type, it is unnecessary to move the carriage and perform complicated scanning control of the substrate, and only the substrate is moved, so that the recording speed can be higher than that of the shuttle type.

The amount of an ink droplet jetted from the ink jet head is preferably 1 pL (picoliter) to 100 pL, more preferably 3 pL to 80 pL, and still more preferably 3 pL to 50 pL.

(Step of irradiating applied ink with active energy rays)

Examples of the active energy rays include γ rays, β rays, electron beams, UV rays, and visible light. In particular, the active energy rays are preferably UV rays.

The peak wavelength of the UV rays is preferably 200 nm to 405 nm, more preferably 250 nm to 400 nm, and still more preferably 300 nm to 400 nm.

A mercury lamp and various lasers such as gas lasers and solid lasers are mainly used as the light source for UV irradiation, and discharge lamps such as a mercury lamp, a metal halide lamp, and a UV fluorescent lamp are well-known. Semiconductor light sources such as UV-LEDs (UV light emitting diodes) and UV-LDs (UV laser diodes) are expected to be the light source for UV irradiation due to their small size, long lifetime, high efficiency, and low cost. In particular, the light source for UV irradiation is preferably a metal halide lamp, a high-pressure mercury lamp, a medium-pressure mercury lamp, a low-pressure mercury lamp, or a UV-LED.

In the present disclosure, polymerization of only part of the polymerizable monomers in an ink is referred to as "pre-curing," and irradiation with active energy rays for pre-curing is referred to as "pinning exposure."

In the present disclosure, polymerization of substantially all the polymerizable compounds in an ink is referred to also as "final curing," and irradiation with active energy rays for final curing is referred to also as "final exposure."

In the step of irradiating with active energy rays, it is preferable that the ink is first pre-cured and then final-cured. Specifically, it is preferable that, after the application of the ink, the ink is subjected to pinning exposure and is finally subjected to final exposure.

The reaction rate of the ink after pinning exposure is preferably 10% to 80%.

The reaction rate of the ink is the polymerization rate of the polymerizable compounds contained in the ink that is determined by high-performance liquid chromatography.

When the reaction rate of the ink is 10% or more, insufficient spreading of dots is prevented, and therefore the graininess of the final image is improved.

When the reaction rate of the ink is 80% or less, droplet interference between ink dots is reduced, and therefore

the quality of the final image is improved.

From the viewpoint of further improving the graininess of the final image, the reaction rate of the ink is preferably 15% or more.

From the viewpoint of further improving the quality of the final image, the reaction rate of the ink is preferably 75% or less, more preferably 50% or less, preferably 40% or less, more preferably 30% or less, and still more preferably 25% or less.

The reaction rate of the ink after the final exposure is preferably more than 80% and 100% or less, more preferably 85% to 100%, and still more preferably 90% to 100%.

When the reaction rate is more than 80%, the adhesiveness is further improved.

The reaction rate of the ink is determined by the following method.

A substrate that has been processed to the point where the irradiation of the ink with active energy rays has been completed is prepared. A sample piece having a size of 20 mm × 50 mm (which is hereinafter referred to as an irradiated sample piece) is cut from a region of the substrate in which the ink film is present. The cut irradiated sample piece is immersed in 10 mL of THF (tetrahydrofuran) for 24 hours, and an eluate containing the eluted ink is thereby obtained. High-performance liquid chromatography is performed on the obtained eluate to determine the amount of the polymerizable monomers (which is hereinafter referred to as the "monomer amount X1 after irradiation").

Separately, the same procedure as above is repeated except that the ink on the substrate is not irradiated with the active energy rays, and the amount of the polymerizable compounds (which is hereinafter referred to as the "monomer amount X1 without irradiation") is determined.

The reaction rate (%) of the ink is determined from the following formula using the monomer amount X1 after irradiation and the monomer amount X1 without irradiation.

Reaction rate of ink (%) = ((monomer amount X1 without irradiation - monomer amount X1 after irradiation) / monomer amount X1 without irradiation) × 100

From the viewpoint of achieving the above-described reaction rate of the ink more easily, the exposure dose of the active energy rays for the pinning exposure is preferably 10 mJ/cm$^2$ to 100 mJ/cm$^2$ and more preferably 20 mJ/cm$^2$ to 60 mJ/cm$^2$.

From the viewpoint of completely curing the ink, the exposure dose of the active energy rays for the final exposure is preferably 50 mJ/cm$^2$ to 1000 mJ/cm$^2$ and more preferably 200 mJ/cm$^2$ to 800 mJ/cm$^2$.

In the final exposure, from the viewpoint of improving the adhesiveness to the substrate, it is preferable that the ink is irradiated with the active energy rays in an atmosphere with an oxygen concentration of less than 1% by volume. The oxygen concentration is more preferably 0.5% by volume and still more preferably 0.3% by volume.

In the step of irradiating with the active energy rays, from the viewpoint of image quality, it is preferable to irradiate the ink with the active energy rays within 0.1 seconds to 5 seconds after the ink has landed. When the pinning exposure and the final exposure are performed, it is preferable to irradiate the ink with the active energy rays for the pinning exposure within 0.1 seconds to 5 seconds after the ink has landed. The time from the landing of the ink to the start of the irradiation with the active energy rays (with the active energy rays for the pinning exposure when the pinning exposure and the final exposure are performed) is preferably 0.2 seconds to 1 second or shorter.

[Image recording method B]

An image recording method B according to a fourth embodiment of the disclosure includes the steps of: applying the second ink in the ink set (the ink set according to the second embodiment of the disclosure) to a substrate using an ink jet recording method; irradiating the second ink with active energy rays; applying, using the ink jet recording method, the first ink to the substrate with the second ink applied thereto; and irradiating the first ink with active energy rays.

The type of substrate, the method for applying the inks using the ink jet recording method, and the method for irradiation with the active energy rays are the same as those in the image recording method A.

Features different from the image recording method A will next be described.

Preferably, in the image recording method B, after the application of the second ink, the second ink is subjected to pinning exposure, and the first ink is applied to the pre-cured second ink. After the application of the first ink, the first ink is subjected to pinning exposure, and then the final exposure is finally performed. By pre-curing the second ink, the quality of the final image is improved.

The image recording method B may further include the steps of: applying the third ink to the substrate using the ink jet recording method; and irradiating the applied third ink with active energy rays. In this case, it is preferable that the second ink is applied to the substrate with the third ink applied thereto. Moreover, it is preferable that, after the application of the third ink, the third ink is subjected to pinning exposure, and that, after the application of the second ink, the second ink is

subjected to pinning exposure and then the first ink is applied to the pre-cured second ink, and that, after the application of the first ink, the first ink is subjected to pinning exposure and then final exposure is performed.

[EXAMPLES]

The present disclosure will be described more specifically by way of Examples. However, the present disclosure is not limited to the following Examples so long as the Examples are within the scope of the disclosure.

<Examples 1 to 34 and Comparative Examples 1 to 5>

[Preparation of first inks and second inks]

To prepare first inks (cyan inks), first, a cyan pigment dispersion was prepared.
To prepare second inks (white inks), first, a white pigment dispersion was prepared.
A cyan pigment (30 parts by mass), SOLSPERSE 32000 (9 parts by mass) used as a dispersing agent, 3MPDDA (60 parts by mass) used as a dispersion medium, and UV22 (1 part by mass) used as a polymerization inhibitor were placed in a dispersing motor mill M50 (manufactured by Eiger), and the mixture was subjected to dispersion treatment using zirconia beads with a diameter of 0.65 mm at a peripheral speed of 9 m/s for 4 hours to thereby obtain a cyan pigment dispersion.
To prepare second inks (white inks), first, a white pigment dispersion was prepared.
A white pigment (60 parts by mass), SOLSPERSE 32000 (9 parts by mass) used as a dispersing agent, 3MPDDA (30 parts by mass) used as a dispersion medium, and UV22 (1 part by mass) used as a polymerization inhibitor were placed in a dispersing motor mill M50 (manufactured by Eiger), and the mixture was subjected to dispersion treatment using zirconia beads with a diameter of 0.65 mm at a peripheral speed of 9 m/s for 4 hours to thereby obtain a white pigment dispersion.
The details of the components contained in the cyan pigment dispersion and the white pigment dispersion are as follows.

- Cyan pigment: C.I. Pigment Blue 15:4 (product name: "Heliogen (registered trademark) Blue D 7110 F," Sun Chemical (manufactured by DIC Corporation)
- White pigment: Titanium oxide (product name: "KRONOS 2300" manufactured by KRONOS)
- SOLSPERSE 32000: Polyethyleneimine-based dispersing agent (product name: "SOLSPERSE 32000" manufactured by Lubrizol)
- 3MPDDA: 3-Methyl-1,5-pentanediol diacrylate (product name: "SR341" manufactured by Sartomer)
- UV22: Mixture of 2,6-bis(1,1-dimethylethyl)-4-(phenylmethylene)-2,5-cyclohexadien-1-one and propoxylated glycerin triacrylate (product name: "IRGASTAB UV-22" manufactured by BASF)

UV22 contains propoxylated glycerin triacrylate as an additional polymerizable compound. However, since the content of propoxylated glycerin triacrylate is very small, UV22 is placed in the "Polymerization inhibitor" columns in tables.
Next, the prepared cyan pigment dispersion was mixed with components shown in Tables 2-1 to 9 below such that the contents of the components were equal to values (% by mass) in Tables 2-1 to 9. The mixtures were stirred using mixers (product name: "L4R" manufactured by Silverson) under the conditions of 25°C and 5000 rpm for 20 minutes, and first inks were thereby obtained. The prepared white pigment dispersion was mixed with components shown in the tables shown below such that the contents of the components were equal to values (% by mass) in the tables. The mixtures were stirred using mixers (product name: "L4R" manufactured by Silverson) under the conditions of 25°C and 5000 rpm for 20 minutes, and second inks were thereby obtained.

[Preparation of third ink]

Components shown in Tables 2-1 to 9 below were mixed such that the contents of the components were equal to values (% by mass) in Tables 2-1 to 9. The mixtures were stirred using mixers (product name: "L4R" manufactured by Silverson) under the conditions of 25°C and 5000 rpm for 20 minutes, and third inks were thereby obtained.
The details of the components shown in Tables 2-1 to 9 are as described below.
To prepare the inks, Speedcure 7010L (manufactured by Lambson) was used. Speedcure 7010L is a mixture of Speedcure 7010 and EOTMPTA, and the mixing mass ratio is 1:1. Speedcure 7010 is a polymerization initiator, and EOTMPTA is an additional polymerizable compound. Therefore, they will be described in the "Polymerization initiators" section and the "Additional polymerizable compounds" section.

<Specific bifunctional (meth)acrylates>

Each specific bifunctional (meth)acrylate is a bifunctional (meth)acrylate having a linear or branched alkylene group having 4 to 10 carbon atoms.

- 3MPDDA: As described above.
- HDDA: 1,6-Hexanediol diacrylate (product name: "Viscoat #230" manufactured by OSAKA ORGANIC CHEMICAL INDUSTRY LTD.)
- NDDA: 1,9-Hexanediol diacrylate (product name: "Viscoat #260" manufactured by OSAKA ORGANIC CHEMICAL INDUSTRY LTD.)
- DDDA: 1,10-Decanediol diacrylate (product name: "SR595" manufactured by Sartomer)
- BDDA: 1,4-Butanediol diacrylate (product name: "Viscoat #195" manufactured by OSAKA ORGANIC CHEMICAL INDUSTRY LTD.)

<Specific monofunctional (meth)acrylate>

The specific monofunctional (meth)acrylate is a monofunctional (meth)acrylate having a hydroxy group.

- 4-HBA: 4-Hydroxybutyl acrylate (product name: "4-HBA" manufactured by OSAKA ORGANIC CHEMICAL INDUSTRY LTD.)

<Acid group-containing polymerizable monomer>

- A-SA: 2-Acryloyloxyethyl succinate (product name: "NK Ester A-SA" manufactured by Shin Nakamura Chemical Co., Ltd.)

<Acid group-containing polymer>

- Polymer A: Binder A described in paragraph 0225 in JP5588887B (structural unit derived from methacrylic acid : structural unit derived from methyl methacrylate = 20:80)

<Additional polymerizable compounds>

Each additional polymerizable compound is a polymerizable compound other than the specific bifunctional (meth)acrylates, the specific monofunctional (meth)acrylate, and the acid group-containing polymerizable monomer.

- CTFA: Cyclic trimethylolpropane formal acrylate (product name: "Viscoat #200" manufactured by OSAKA ORGANIC CHEMICAL INDUSTRY LTD.)
- EOTMPTA: Trimethylolpropane EO-added triacrylate (component contained in an amount of 50% by mass in ["Speedcure 7010L (product name)" manufactured by Lambson])
- PEG400DA: polyethylene glycol diacrylate (product name: "SR344 manufactured by Sartomer)

<Polymerization initiators>

- BAPO: Bis(2,4,6-trimethylbenzoyl)phenylphosphine oxide (product name: "Omnirad 819" manufactured by IGM Resins B.V.)
- Speedcure 7010: 1,3-Di({α-[1-chloro-9-oxo-9H-thioxanthen-4-yl)oxy]acetylpoly[oxy(1-methylethylene)]}oxy)-2,2-bis({α-[1-methylethylene)]}oxymethyl)propane (component contained in an amount of 50% by mass in ["Speedcure 7010L (product name)" manufactured by Lambson])

<Polymerization inhibitors>

- UV12: N-nitroso-N-phenylhydroxylamine aluminum salt (product name: "FLORSTAB UV-12" manufactured by Kromachem)
- UV22: As described above.

<Silicone-based surfactants>

The ratio M of the content mass of the polysiloxane structure to the content mass of the polyether structure is as follows.

- Tegorad 2010: (Meth)acryloyl group-containing silicone-based surfactant (product name: "Tegorad 2010" manufactured by EVONIK, mass ratio M: 0.627119)
- Tegorad 2500: (Meth)acryloyl group-containing silicone-based surfactant (product name: "Tegorad 2500" manufactured by EVONIK, mass ratio M: 0.937369)
- Tegorad 2100: (Meth)acryloyl group-containing silicone-based surfactant (product name: "Tegorad 2100" manufactured by EVONIK, mass ratio M: 0.355208)
- Tegorad 2200N: (Meth)acryloyl group-containing silicone-based surfactant (product name: "Tegorad 2200N" manufactured by EVONIK, mass ratio M: 0.36319)
- Tegorad 2250: (Meth)acryloyl group-containing silicone-based surfactant (product name: "Tegorad 2250" manufactured by EVONIK, mass ratio M: 0.451587)
- Tegorad 2300: (Meth)acryloyl group-containing silicone-based surfactant (product name: "Tegorad 2300" manufactured by EVONIK, mass ratio M: 0.612617)

<Coloring agents>

- Cyan pigment: As described above.
- White pigment: As described above.

<Dispersing agent>

- SOLSPERSE 32000: As described above.

<Acrylic resins>

- BR113: "DIANAL BR113 (product name)" manufactured by Mitsubishi Chemical Corporation, glass transition temperature: 75°C, weight average molecular weight: 30000
- Polymers A to I: Acrylic resins synthesized by the following methods.

- Synthesis of polymer A -

20 g of a solution mixture of methyl methacrylate and isobornyl acrylate and 30 g of methyl ethyl ketone were introduced into a three-neck flask purged with nitrogen. The mixture was stirred using a stirrer (three-one motor manufactured by Shinto Scientific Co., Ltd.) and heated to 65°C while nitrogen was caused to flow through the flask.

80 mg of 2,2-azobis(2,4-dimethylvaleronitrile) (product name: "V-65" manufactured by FUJIFILM Wako Pure Chemical Corporation) was added to the solution mixture, and the resulting mixture was stirred at 65°C for 30 minutes.

80 mg of V-65 was added, and the resulting mixture was further stirred at 65°C for 1 hour.

The resulting reaction solution was poured into 1,000 mL of hexane under stirring, and the precipitate generated was heat-dried to obtain polymer A. The weight average molecular weight of polymer A was 30,000 to 35,000.

- Synthesis of polymers B to I -

Polymers B to I were obtained using polymerizable monomers in amounts (in terms of mass (g)) shown in Table 1 by the same method as in the synthesis of polymer A except that the amount of V-65 and the heating time were changed appropriately.

Generally, as the amount of V-65 increases, the weight average molecular weight of the polymer obtained decreases. As the amount of V-65 decreases, the weight average molecular weight of the polymer obtained increases. As the heating time increases, the weight average molecular weight of the polymer obtained increases. As the heating time decreases, the weight average molecular weight of the polymer obtained decreases.

The details of the polymerizable monomers used for the synthesis of polymers A to I are as follows.

- Isobornyl methacrylate (product name: "Light Ester IB-X" manufactured by KYOEISHA CHEMICAL Co., Ltd.)
- t-Butyl methacrylate (product name: "Light Ester TB" manufactured by KYOEISHA CHEMICAL Co., Ltd.)
- 2-Phenoxyethyl methacrylate (product name: "SR340" manufactured by Sartomer)
- 2-Ethylhexyl methacrylate (product name: "Light Ester EH" manufactured by KYOEISHA CHEMICAL Co., Ltd.)
- Isodecyl methacrylate (product name: "Light Ester ID" manufactured by KYOEISHA CHEMICAL Co., Ltd.)
- n-Lauryl methacrylate (product name: "Light Ester L" manufactured by KYOEISHA CHEMICAL Co., Ltd.)
- n-Butyl methacrylate (product name: "Light Ester NB" manufactured by KYOEISHA CHEMICAL Co., Ltd.)
- Methyl methacrylate (product name: "M0087" manufactured by TOKYO CHEMICAL INDUSTRY Co., Ltd.)

- Weight average molecular weights of acrylic resins ("Mw" in Table 1) -

The weight average molecular weight of each acrylic resin was measured using a high-performance liquid chromatograph (HPLC) (product name: "HLC-8220GPC" manufactured by TOSOH Corporation).

The columns used were three TSKgel Super AWM-H columns (manufactured by TOSOH Corporation, 6.0 mm I.D. × 15 cm), and the eluant used was N-methylpyrrolidone (10 mM of LiBr was added thereto). The measurement conditions are as follows. The sample concentration was 0.1% by mass, and the flow rate was 0.5 mL/min. The injection amount of the sample was 60 μL, and the measurement temperature was 40°C. The detection was performed using a differential refractive index (RI) detector. A calibration curve was produced using 8 standard samples including "n-propylbenzene" and "TSK standard polystyrenes (product name)" manufactured by TOSOH Corporation: "F-40," "F-20," "F-4," "F-1," "A-5000," "A-2500," and "A-1000."

- Glass transition temperatures of acrylic resins ("Tg" in Table 1) -

The glass transition temperature of each acrylic resin was measure using a differential scanning calorimeter (DSC) (product name: "EXSTAR6220" manufactured by SII NanoTechnology Inc.).

Table 1

| Polymerizable monomer | Polymer A | Polymer B | Polymer C | Polymer D | Polymer E | Polymer F | Polymer G | Polymer H | Polymer I |
|---|---|---|---|---|---|---|---|---|---|
| Methyl methacrylate | 10 | - | - | 10 | 10 | 10 | - | - | - |
| n-Butyl methacrylate | - | 10 | 10 | - | - | - | - | 10 | 10 |
| Isobornyl methacrylate | 10 | 10 | - | - | - | - | - | - | - |
| t-Butyl methacrylate | - | - | 10 | - | - | - | - | 10 | 10 |
| 2-Ethylhexyl methacrylate | - | - | - | 10 | - | - | - | - | - |
| Isodecyl metha-crylate | - | - | - | - | 10 | - | - | - | - |
| n-Lauryl metha-crylate | - | - | - | - | - | 10 | - | - | - |

(continued)

| Polymerizable monomer | Polymer A | Polymer B | Polymer C | Polymer D | Polymer E | Polymer F | Polymer G | Polymer H | Polymer I |
|---|---|---|---|---|---|---|---|---|---|
| 2-Phenoxyethyl methacrylate | - | - | - | - | - | - | 20 | - | - |
| Tg (°C) | 130 | 75 | 65 | 50 | 40 | 35 | 20 | 65 | 65 |
| Mw | 30000-35000 | | | | | | | 5000 | 10000 |

The prepared first, second, and third inks were used to record images.

In image recording A, only the first inks were used to record images. In image recording B, the first and third inks were used to record images. In image recording C, the first, second, and third inks were used to record images.

(Image recording A)

One of the first inks (cyan inks) was applied to an acrylic substrate (Acryl manufactured by JAPAN ACRYACE CORPORATION) using an ink jet recording apparatus (product name: "Cylinder JET" manufactured by Tritek Co., Ltd.) and an ink jet head (product name: "KM1800i" manufactured by KONICA MINOLTA, INC.). Specifically, the first ink was applied to a rectangular area of 7 cm × 5 cm under the conditions of an ink droplet amount of 10.5 pL (picoliters) and a resolution of 600 × 600 dpi (dot per inch) to thereby record a 100% solid image with a thickness of 4 μm to 6 μm. After the application of the first ink, an LED light source included with the ink jet recording apparatus was used to apply UV rays at an exposure of 100 $mJ/cm^2$ to 1000 $mJ/cm^2$. The LED light source used was a UV-LED irradiator (product name: "G4B" manufactured by KYOCERA Corporation) having a peak wavelength of 385 nm.

In the image recording described above, the gap between the surface of the acrylic substrate and the ink jet head was adjusted to 0.5 mm to 1 mm. By adjusting the jetting voltage, the jetted droplet speed was adjusted to 7 m/s to 9 m/s.

(Image recording B)

One of the third inks (primers) was applied to a barrel portion of a PET bottle (product name: "PET 500 maru" manufactured by KOKUGO Co., Ltd.) using an ink jet recording apparatus (product name: "CylinderJET" manufactured by Tritek Co., Ltd.) and an ink jet head (product name: "KM1800i" manufactured by KONICA MINOLTA, INC.). Specifically, the third ink was applied to a surface region of the PET bottle having a size of 7 cm in the longitudinal direction of the PET bottle × 5 cm in its circumferential direction under the conditions of an ink droplet amount of 10.5 pL (picoliters) and a resolution of 600 × 600 dpi (dot per inch) to thereby record a 100% solid image with a thickness of 4 μm to 6 μm. Next, one of the first inks (cyan inks) was applied to the surface region with the third ink applied thereto under the same condition as those for the third ink to thereby record a 100% solid image with a thickness of 4 μm to 6 μm. After the application of the third ink and also after the application of the first ink, an LED light source included with the ink jet recording apparatus was used to apply UV rays at an exposure of 10 $mJ/cm^2$ to 100 $mJ/cm^2$. The LED light source used was a UV-LED irradiator (product name: "G4B" manufactured by KYOCERA Corporation) having a peak wavelength of 385 nm.

Then the PET bottle with the images recorded thereon was placed in an exposing device. The PET bottle was placed horizontally. The exposing device can rotate the PET bottle. While the entire images recorded on the PET bottle were rotated, the LED light source was used to expose the images to light. The UV rays were applied at an exposure of 50 $mJ/cm^2$ to 500 $mJ/cm^2$ to completely cure the third and first inks, and an image recorded article was thereby obtained.

In the image recording described above, the gap between the surface of the PET bottle and the ink jet head was adjusted to 0.5 mm to 1 mm. By adjusting the jetting voltage, the jetted droplet speed was adjusted to 7 m/s to 9 m/s.

(Image recording C)

One of the third inks (primers) was applied to a barrel portion of a PET bottle (product name: "PET 500 maru" manufactured by KOKUGO Co., Ltd.) using an ink jet recording apparatus (product name: "CylinderJET" manufactured by Tritek Co., Ltd.) and an ink jet head (product name: "KM1800i" manufactured by KONICA MINOLTA, INC.). Specifically, the third ink was applied to a surface region of the PET bottle having a size of 7 cm in the longitudinal direction of the PET bottle × 5 cm in its circumferential direction under the conditions of an ink droplet amount of 10.5 pL (picoliters) and a resolution of 600 × 600 dpi (dot per inch) to thereby record a 100% solid image with a thickness of 4 to 6 μm. Next, one of the second inks (white inks) was applied to the surface region with the third ink applied thereto under the same condition as those for the third ink to thereby record a 100% solid image with a thickness of 4 μm to 6 μm. Next, one of the first inks (cyan inks) was applied to the surface region with the third and second inks applied thereto under the same condition as those for the third

ink to thereby record a 100% solid image with a thickness of 4 μm to 6 μm. After the application of the third ink, after the application of the second ink, and also after the application of the first ink, an LED light source included with the ink jet recording apparatus was used to apply UV rays at an exposure of 10 mJ/cm$^2$ to 100 mJ/cm$^2$. The LED light source used was a UV-LED irradiator (product name: "G4B" manufactured by KYOCERA Corporation) having a peak wavelength of 385 nm.

Then the PET bottle with the images recorded thereon was placed in an exposing device. The PET bottle was placed horizontally. The exposing device can rotate the PET bottle. While the entire images recorded on the PET bottle were rotated, the LED light source was used to expose the images to light. The UV rays were applied at an exposure of 50 mJ/cm$^2$ to 500 mJ/cm$^2$ to completely cure the third, second, and first inks, and an image recorded article was thereby obtained.

In the image recording described above, the gap between the surface of the PET bottle and the ink jet head was adjusted to 0.5 mm to 1 mm. By adjusting the jetting voltage, the jetted droplet speed was adjusted to 7 m/s to 9 m/s.

[Evaluation]

In each of the Examples and Comparative Examples, the image recorded articles obtained by the image recording A, the image recording B, and the image recording C were used to evaluate rubfastness, separability, water resistance, and odor. For each of the first and second inks, jettability was also evaluated.

In "Evaluation 1" columns in Tables 2-1 to 9, the results of the evaluation of the rubfastness, separability, water resistance, and odor of each image recorded article obtained by the image recording A and the jettability of each first ink are shown.

In "Evaluation 2" columns in Tables 2-1 to 9, the results of the evaluation of the rubfastness, separability, water resistance, and odor of each image recorded article obtained by the image recording B are shown.

In "Evaluation 3" columns in Tables 2-1 to 9, the results of the evaluation of the rubfastness, separability, water resistance, and odor of each image recorded article obtained by the image recording C and the jettability of each second ink are shown.

The evaluation methods are as follows.

<Separability (image recorded articles obtained by image recording A)>

One of the obtained image recorded articles was cut into 0.5 cm × 0.5 cm square pieces to prepare 20 samples. Each of the samples was stirred in a 1.5% by mass aqueous sodium hydroxide solution at 85°C.

In this case, the image recorded articles obtained by the image recording A were stirred for 30 minutes, and the image recorded articles obtained by the image recording B or C were stirred for 10 minutes.

Then each of the resulting samples was left to stand for 10 minutes, and the ink film floating on the surface was collected. The sample settled in the aqueous sodium hydroxide solution was washed with water and dried in a thermostatic oven at 30°C for 12 hours. After the drying, the state of the sample was visually inspected.

For each sample with the ink film completely peeled off, plus five points were given.

For each sample with part of the ink film peeled off, plus two points were given.

For each sample with no ink film peeled off at all, minus five points were given.

Points were assigned to each of the 20 samples according to the above criteria, and the separability was evaluated based on the total score. The evaluation criteria are as follows.

5: The total score is 91 to 100.
4: The total score is 81 to 90.
3: The total score is 51 to 80.
2: The total score is 10 to 50.
1: The total score is 9 or less.

<Rubfastness>

A white cotton rubbing cloth was attached to the distal end of a rubbing finger, and a Gakushin-type color fastness rubbing tester (product name: "AB-301" manufactured by TESTER SANGYO CO., LTD.) was used to rub the image recorded surface of each image recorded article back and forth 100 times with no weight. The degree of contamination of the white cotton cloth and the discoloration of the image recorded article were evaluated using a grey scale for assessing staining. The white cotton rubbing cloth used was a 100% cotton Kanakin No. 3 cloth. For the color fastness to dry rubbing, the degree of contamination of the white cotton cloth and the discoloration of the image recorded article were evaluated according to the following evaluation criteria. The grey scale for assessing staining includes 9 grades, i.e., Grade 1, Grade

1-2, Grade 2, Grade 2-3, Grade 3, Grade 3-4, Grade 4, Grade 4-5, and Grade 5, according to JIS L 0805 (2005).

5: Grade 5
4: Grade 4-5
3: Grade 4
2: Grade 2-3, Grade 3, and Grade 3-4
1: Grade 1, Grade 1-2, and Grade 2

<Water resistance>

One of the obtained image recorded articles was immersed in ion exchanged water at 10°C to 25°C. After 24 hours, the image recorded article was removed from the ion exchanged water. The image recorded surface of the removed image recorded article was scratched with a pencil (hardness H), and the presence or absence of peeling of the image was visually checked. When no image peeling was found, the above procedure was repeated. Specifically, the image recorded article was again immersed in ion exchanged water and then removed therefrom after 24 hours, and the image surface of the image recorded article was scratched with the pencil (hardness H).
This procedure was repeated a maximum of 9 times. When image peeling occurred, the procedure was not repeated any more. The evaluation criteria are as follows. Rank 3 and higher ranks are acceptable levels for practical use.

5: No image peeling was found even after 8 repetitions of the procedure.
4: Image peeling was found after 8 repetitions of the procedure.
3: Image peeling was found after 7 repetitions of the procedure.
2: Image peeling was found after 6 repetitions of the procedure.
1: Image peeling was found after 5 or fewer repetitions of the procedure.

<Odor>

A 10 cm × 10 cm image sample was cut from one of the obtained image recorded articles. Within 10 minutes after completion of the image recording, the image sample was placed in a large-mouth glass bottle with a volume of 500 mL, and the glass bottle was tightly sealed and left to stand for 3 days. After 3 days, sensory evaluation for odor was performed. Ten subjects scored the odor. Specifically, when "no odor was detected," a score of 50 was given. When "a slight odor was detected," a score of 47 was given. When "a light odor was detected," a score of 30 was given. When "a distinct odor was detected," a score of 20 was given. When "a strong odor was detected," a score of 0 was given. The odor was evaluated based on the total score. The evaluation criteria are as follows. Rank 3 and higher ranks are acceptable levels for practical use.

5: 495 or higher
4: 485 or higher and lower than 495
3: 470 or higher and lower than 485
2: 450 or higher and lower than 470
1: Lower than 450

<Jettability>

The jettability of each of the first and second inks was evaluated using an ink jet recording apparatus (product name: "Cylinder JET" manufactured by Tritek Co., Ltd.) and an ink jet head (product name: "KM1800i" manufactured by KONICA MINOLTA, INC.). The number of jetting nozzles before image recording was counted using a nozzle check pattern. Then, after image recording was performed for 10 minutes, the number of jetting nozzles after the image recording was counted using the nozzle check pattern.
The number of jetting nozzles before the image recording and the number of jetting nozzles after the image recording were used to compute a reduction in the number of jetting nozzles. The same test was repeated three times, and the jettability was evaluated based on the average reduction N in the number of jetting nozzles. The evaluation criteria are as follows.

Reduction in number of jetting nozzles = number of jetting nozzles before image recording - number of jetting nozzles after image recording

5: N is less than 1.
4: N 1 or more and less than 3.
3: N is 3 or more and less than 4.
2: N is 4 or more and less than 7.
1: N is 7 or more.

The evaluation results are shown in Tables 2-1 to 9.

In Tables 2-1 to 9, "Ms / Mc" means the ratio of the content mass of the silicone-based surfactant having a (meth) acryloyl group to the content mass of the acrylic resin.

Table 2-1

| | | Example 1 | | | Example 2 | | |
|---|---|---|---|---|---|---|---|
| | | First ink | Second ink | Third ink | First ink | Second ink | Third ink |
| Specific bifunctional (meth)acrylate | 3MPDDA | 41.7 | 29.5 | 68.1 | 41.7 | 29 | 68.3 |
| Specific monofunctional (meth)acrylate | 4-HBA | 40 | 40 | 10 | 40 | 40 | 10 |
| Acid group-containing polymerizable monomer | A-SA | - | - | 15 | - | - | 15 |
| Additional polymerizable compound | EOTMPTA | 2 | 0.25 | 0.1 | 2 | 0.25 | 0.1 |
| Polymerization initiator | BAPO | 4 | 4 | 3.8 | 4 | 4 | 3.8 |
| | Speedcure 7010 | 2 | 0.25 | 0.1 | 2 | 0.25 | 0.1 |
| Polymerization inhibitor | UV12 | 0.5 | 0.5 | 0.2 | 0.5 | 0.5 | 0.2 |
| | UV22 | 0.095 | 0.3 | - | 0.095 | 0.3 | - |
| Silicone-based surfactant | Tegorad 2010 | 4 | 3 | 2 | 4 | 3 | 2 |
| | Tegorad 2500 | 1 | 1 | 0.5 | 1 | 1 | 0.5 |
| Acrylic resin | BR113 | 1 | 0.5 | 0.2 | 1 | 1 | - |
| Coloring agent | Cyan pigment | 2.85 | - | - | 2.85 | - | - |
| | White pigment | - | 18 | - | - | 18 | - |
| Dispersing agent | SOLSPERESE 32000 | 0.855 | 2.7 | - | 0.855 | 2.7 | - |
| Ms/Mc | | 5 | 8 | - | 5 | 4 | - |
| | | Evaluation 1 | Evaluation 2 | Evaluation 3 | Evaluation 1 | Evaluation 2 | Evaluation 3 |
| Separability | | 5 | 5 | 5 | 5 | 5 | 5 |
| Rubfastness | | 5 | 5 | 5 | 5 | 5 | 5 |
| Jettability | | 5 | - | 5 | 5 | - | 5 |
| Water resistance | | 5 | 5 | 5 | 5 | 5 | 3 |
| Odor | | 5 | 5 | 5 | 5 | 5 | 5 |

Table 2-2

| | | Example 3 | | | Example 4 | | |
|---|---|---|---|---|---|---|---|
| | | First ink | Second ink | Third ink | First ink | Second ink | Third ink |
| Specific bifunctional (meth)acrylate | 3MPDDA | 41.7 | 29 | 67.3 | 42.2 | 30 | 68.3 |
| Specific monofunctional (meth)acrylate | 4-HBA | 40 | 40 | 10 | 40 | 40 | 10 |
| Acid group-containing polymerizable monomer | A-SA | - | - | 15 | - | - | 15 |
| Additional polymerizable compound | EOTMPTA | 2 | 0.25 | 0.1 | 2 | 0.25 | 0.1 |
| Polymerization initiator | BAPO | 4 | 4 | 3.8 | 4 | 4 | 3.8 |
| | Speedcure 7010 | 2 | 0.25 | 0.1 | 2 | 0.25 | 0.1 |
| Polymerization inhibitor | UV12 | 0.5 | 0.5 | 0.2 | 0.5 | 0.5 | 0.2 |
| | UV22 | 0.095 | 0.3 | - | 0.095 | 0.3 | - |
| Silicone-based surfactant | Tegorad 2010 | 4 | 3 | 2 | 4 | 3 | 2 |
| | Tegorad 2500 | 1 | 1 | 0.5 | 1 | 1 | 0.5 |
| Acrylic resin | BR113 | 1 | 1 | 1 | 0.5 | - | - |
| Coloring agent | Cyan pigment | 2.85 | - | - | 2.85 | - | - |
| | White pigment | - | 18 | - | - | 18 | - |
| Dispersing agent | SOLSPERESE 32000 | 0.855 | 2.7 | - | 0.855 | 2.7 | - |
| Ms/Mc | | 5 | 4 | - | 10 | - | - |
| | | Evaluation 1 | Evaluation 2 | Evaluation 3 | Evaluation 1 | Evaluation 2 | Evaluation 3 |
| Separability | | 5 | 5 | 5 | 5 | 5 | 5 |
| Rubfastness | | 5 | 5 | 5 | 3 | 3 | 3 |
| Jettability | | 5 | - | 5 | 5 | - | 5 |
| Water resistance | | 5 | 3 | 3 | 5 | 5 | 5 |
| Odor | | 5 | 5 | 5 | 5 | 5 | 5 |

Table 2-3

| | | Example 5 | | | Comparative Example 1 | | | Comparative Example 2 | | |
|---|---|---|---|---|---|---|---|---|---|---|
| | | First ink | Second ink | Third ink | First ink | Second ink | Third ink | First ink | Second ink | Third ink |
| Specific bifunctional (meth) acryl ate | 3MPDDA | 40.7 | 30 | 68.3 | 42.7 | 30 | 68.3 | 46.7 | 34 | 70.8 |
| Specific monofuncti onal (meth)acryl ate | 4-HBA | 40 | 40 | 10 | 40 | 40 | 10 | 40 | 40 | 10 |
| Acid group-containing polymeriza ble monomer | A-SA | - | - | 15 | - | - | 15 | - | - | 15 |
| Additional polymeriza ble compound | EOTMPT A | 2 | 0.25 | 0.1 | 2 | 0.25 | 0.1 | 2 | 0.25 | 0.1 |
| Polymerizat ion initiator | BAPO | 4 | 4 | 3.8 | 4 | 4 | 3.8 | 4 | 4 | 3.8 |
| | Speedcure 7010 | 2 | 0.25 | 0.1 | 2 | 0.25 | 0.1 | 2 | 0.25 | 0.1 |
| Polymerizat ion inhibitor | UV12 | 0.5 | 0.5 | 0.2 | 0.5 | 0.5 | 0.2 | 0.5 | 0.5 | 0.2 |
| | UV22 | 0.095 | 0.3 | - | 0.095 | 0.3 | - | 0.095 | 0.3 | - |
| Silicone-based surfactant | Tegorad 2010 | 4 | 3 | 2 | 4 | 3 | 2 | - | - | - |
| | Tegorad 2500 | 1 | 1 | 0.5 | 1 | 1 | 0.5 | - | - | - |
| Acrylic resin | BR113 | 2 | - | - | - | - | - | 1 | - | - |
| Coloring agent | Cyan pigment | 2.85 | - | - | 2.85 | - | - | 2.85 | | - |
| | White pigment | - | 18 | - | - | 18 | - | - | 18 | - |
| Dispersing agent | SOLSPER ESE 32000 | 0.855 | 2.7 | - | 0.855 | 2.7 | - | 0.855 | 2.7 | - |
| Ms/Mc | | 2.5 | - | - | - | - | - | - | - | - |
| | | Evaluati on 1 | Evaluati on 2 | Evaluati on 3 | Evaluati on 1 | Evaluati on 2 | Evaluati on 3 | Evaluati on 1 | Evaluati on 2 | Evaluati on 3 |
| Separability | | 5 | 5 | 5 | 5 | 5 | 5 | 1 | 1 | 1 |
| Rubfastness | | 5 | 5 | 5 | 2 | 2 | 2 | 5 | 5 | 5 |
| Jettability | | 3 | - | 3 | 5 | - | 5 | 5 | - | 5 |
| Water resistance | | 5 | 5 | 5 | 5 | 5 | 5 | 5 | 5 | 5 |

(continued)

| | Evaluation 1 | Evaluation 2 | Evaluation 3 | Evaluation 1 | Evaluation 2 | Evaluation 3 | Evaluation 1 | Evaluation 2 | Evaluation 3 |
|---|---|---|---|---|---|---|---|---|---|
| Odor | 5 | 5 | 5 | 5 | 5 | 5 | 5 | 5 | 5 |

Table 3-1

| | | Example 6 | | | Example 7 | | |
|---|---|---|---|---|---|---|---|
| | | First ink | Second ink | Third ink | First ink | Second ink | Third ink |
| Specific bifunctional (meth)acrylate | 3MPDDA | 41.7 | 29.5 | 68.1 | 41.7 | 29.5 | 68.1 |
| Specific monofunctional (meth)acrylate | 4-HBA | 40 | 40 | 10 | 40 | 40 | 10 |
| Acid group-containing polymerizable monomer | A-SA | - | - | 15 | - | - | 15 |
| Additional polymerizable compound | EOTMPTA | 2 | 0.25 | 0.1 | 2 | 0.25 | 0.1 |
| Polymerization initiator | BAPO | 4 | 4 | 3.8 | 4 | 4 | 3.8 |
| | Speedcure 7010 | 2 | 0.25 | 0.1 | 2 | 0.25 | 0.1 |
| Polymerization inhibitor | UV12 | 0.5 | 0.5 | 0.2 | 0.5 | 0.5 | 0.2 |
| | UV22 | 0.095 | 0.3 | - | 0.095 | 0.3 | - |
| Silicone-based surfactant | Tegorad 2010 | 4 | 3 | 2 | 4 | 3 | 2 |
| | Tegorad 2500 | 1 | 1 | 0.5 | 1 | 1 | 0.5 |
| Acrylic resin | Polymer A (Tg: 130°C) | 1 | 0.5 | 0.2 | - | - | - |
| | Polymer B (Tg: 75°C) | - | - | - | 1 | 0.5 | 0.2 |
| | Polymer C (Tg: 65°C) | - | - | - | - | - | - |
| | Polymer D (Tg: 50°C) | - | - | - | - | - | - |
| | Polymer E (Tg: 40°C) | - | - | - | - | - | - |
| Coloring agent | Cyan pigment | 2.85 | - | - | 2.85 | - | - |
| | White pigment | - | 18 | - | - | 18 | - |
| Dispersing agent | SOLSPERESE 32000 | 0.855 | 2.7 | - | 0.855 | 2.7 | - |
| Ms/Mc | | 5 | 8 | - | 5 | 8 | - |
| | | Evaluation 1 | Evaluation 2 | Evaluation 3 | Evaluation 1 | Evaluation 2 | Evaluation 3 |
| Separability | | 5 | 5 | 5 | 5 | 5 | 5 |
| Rubfastness | | 5 | 5 | 5 | 5 | 5 | 5 |
| Jettability | | 4 | - | 4 | 5 | - | 5 |
| Water resistance | | 5 | 5 | 5 | 5 | 5 | 5 |
| Odor | | 5 | 5 | 5 | 5 | 5 | 5 |

Table 3-2

| | | Example 8 | | | Example 9 | | | Example 10 | | |
|---|---|---|---|---|---|---|---|---|---|---|
| | | First ink | Second ink | Third ink | First ink | Second ink | Third ink | First ink | Second ink | Third ink |
| Specific bifunctional (meth) acryl ate | 3MPDDA | 41.7 | 29.5 | 68.1 | 41.7 | 29.5 | 68.1 | 41.7 | 29.5 | 68.1 |
| Specific monofuncti onal (meth)acryl ate | 4-HBA | 40 | 40 | 10 | 40 | 40 | 10 | 40 | 40 | 10 |
| Acid group-containing polymeriza ble monomer | A-SA | - | - | 15 | - | - | 15 | - | - | 15 |
| Additional polymeriza ble compound | EOTMPT A | 2 | 0.25 | 0.1 | 2 | 0.25 | 0.1 | 2 | 0.25 | 0.1 |
| Polymerizat ion initiator | BAPO | 4 | 4 | 3.8 | 4 | 4 | 3.8 | 4 | 4 | 3.8 |
| | Speedcure 7010 | 2 | 0.25 | 0.1 | 2 | 0.25 | 0.1 | 2 | 0.25 | 0.1 |
| Polymerizat ion inhibitor | UV12 | 0.5 | 0.5 | 0.2 | 0.5 | 0.5 | 0.2 | 0.5 | 0.5 | 0.2 |
| | UV22 | 0.095 | 0.3 | - | 0.095 | 0.3 | - | 0.095 | 0.3 | - |
| Silicone-based surfactant | Tegorad 2010 | 4 | 3 | 2 | 4 | 3 | 2 | 4 | 3 | 2 |
| | Tegorad 2500 | 1 | 1 | 0.5 | 1 | 1 | 0.5 | 1 | 1 | 0.5 |
| Acrylic resin | Polymer C (Tg: 65°C) | 1 | 0.5 | 0.2 | - | - | - | - | - | - |
| | Polymer D (Tg: 50°C) | - | - | - | 1 | 0.5 | 0.2 | - | - | - |
| | Polymer E (Tg: 40°C) | - | - | - | - | - | - | 1 | 0.5 | 0.2 |
| Coloring agent | Cyan pigment | 2.85 | - | - | 2.85 | - | - | 2.85 | - | - |
| | White pigment | - | 18 | - | - | 18 | - | - | 18 | - |
| Dispersing agent | SOLSPER ESE 32000 | 0.855 | 2.7 | - | 0.855 | 2.7 | - | 0.855 | 2.7 | - |
| Ms/Mc | | 5 | 8 | - | 5 | 8 | - | 5 | 8 | - |

(continued)

| | Evaluation 1 | Evaluation 2 | Evaluation 3 | Evaluation 1 | Evaluation 2 | Evaluation 3 | Evaluation 1 | Evaluation 2 | Evaluation 3 |
|---|---|---|---|---|---|---|---|---|---|
| Separability | 5 | 5 | 5 | 5 | 5 | 5 | 5 | 5 | 5 |
| Rubfastness | 5 | 5 | 5 | 4 | 4 | 4 | 3 | 3 | 3 |
| Jettability | 5 | - | 5 | 5 | - | 5 | 5 | - | 5 |
| Water resistance | 5 | 5 | 5 | 5 | 5 | 5 | 5 | 5 | 5 |
| Odor | 5 | 5 | 5 | 5 | 5 | 5 | 5 | 5 | 5 |

Table 4-1

| | | Example 11 | | | Comparative Example 3 | | |
|---|---|---|---|---|---|---|---|
| | | First ink | Second ink | Third ink | First ink | Second ink | Third ink |
| Specific bifunctional (meth)acrylate | 3MPDDA | 41.7 | 29.5 | 68.1 | 41.7 | 29.5 | 68.1 |
| Specific monofunctional (meth)acrylate | 4-HBA | 40 | 40 | 10 | 40 | 40 | 10 |
| Acid group-containing polymerizable monomer | A-SA | - | - | 15 | - | - | 15 |
| Additional polymerizable compound | EOTMPTA | 2 | 0.25 | 0.1 | 2 | 0.25 | 0.1 |
| Polymerization initiator | BAPO | 4 | 4 | 3.8 | 4 | 4 | 3.8 |
| | Speedcure 7010 | 2 | 0.25 | 0.1 | 2 | 0.25 | 0.1 |
| Polymerization inhibitor | UV12 | 0.5 | 0.5 | 0.2 | 0.5 | 0.5 | 0.2 |
| | UV22 | 0.095 | 0.3 | - | 0.095 | 0.3 | - |
| Silicone-based surfactant | Tegorad 2010 | 4 | 3 | 2 | 4 | 3 | 2 |
| | Tegorad 2500 | 1 | 1 | 0.5 | 1 | 1 | 0.5 |
| Acrylic resin | Polymer F (Tg: 35°C) | 1 | 0.5 | 0.2 | - | - | - |
| | Polymer G (Tg: 20°C) | - | - | - | 1 | 0.5 | 0.2 |
| | Polymer H (Tg: 65°C) | - | - | - | - | - | - |
| | Polymer I (Tg: 65°C) | - | - | - | - | - | - |
| Coloring agent | Cyan pigment | 2.85 | - | - | 2.85 | - | - |
| | White pigment | - | 18 | - | - | 18 | - |
| Dispersing agent | SOLSPERESE 32000 | 0.855 | 2.7 | - | 0.855 | 2.7 | - |
| Ms/Mc | | 5 | 8 | - | 5 | 8 | - |
| | | Evaluation 1 | Evaluation 2 | Evaluation 3 | Evaluation 1 | Evaluation 2 | Evaluation 3 |
| Separability | | 5 | 5 | 5 | 5 | 5 | 5 |
| Rubfastness | | 3 | 3 | 3 | 2 | 2 | 2 |
| Jettability | | 5 | - | 5 | 5 | - | 5 |
| Water resistance | | 5 | 5 | 5 | 5 | 5 | 5 |
| Odor | | 5 | 5 | 5 | 5 | 5 | 5 |

Table 4-2

| | | Example 12 | | | Example 13 | | |
|---|---|---|---|---|---|---|---|
| | | First ink | Second ink | Third ink | First ink | Second ink | Third ink |
| Specific bifunctional (meth)acrylate | 3MPDDA | 41.7 | 29.5 | 68.1 | 41.7 | 29.5 | 68.1 |
| Specific monofunctional (meth)acrylate | 4-HBA | 40 | 40 | 10 | 40 | 40 | 10 |
| Acid group-containing polymerizable monomer | A-SA | - | - | 15 | - | - | 15 |
| Additional polymerizable compound | EOTMPTA | 2 | 0.25 | 0.1 | 2 | 0.25 | 0.1 |
| Polymerization initiator | BAPO | 4 | 4 | 3.8 | 4 | 4 | 3.8 |
| | Speedcure 7010 | 2 | 0.25 | 0.1 | 2 | 0.25 | 0.1 |
| Polymerization inhibitor | UV12 | 0.5 | 0.5 | 0.2 | 0.5 | 0.5 | 0.2 |
| | UV22 | 0.095 | 0.3 | - | 0.095 | 0.3 | - |
| Silicone-based surfactant | Tegorad 2010 | 4 | 3 | 2 | 4 | 3 | 2 |
| | Tegorad 2500 | 1 | 1 | 0.5 | 1 | 1 | 0.5 |
| Acrylic resin | Polymer F (Tg: 35°C) | - | - | - | - | - | - |
| | Polymer G (Tg: 20°C) | - | - | - | - | - | - |
| | Polymer H (Tg: 65°C) | 1 | 0.5 | 0.2 | - | - | - |
| | Polymer I (Tg: 65°C) | - | - | - | 1 | 0.5 | 0.2 |
| Coloring agent | Cyan pigment | 2.85 | - | - | 2.85 | - | - |
| | White pigment | - | 18 | - | - | 18 | - |
| Dispersing agent | SOLSPERESE 32000 | 0.855 | 2.7 | - | 0.855 | 2.7 | - |
| Ms/Mc | | 5 | 8 | - | 5 | 8 | - |
| | | Evaluation 1 | Evaluation 2 | Evaluation 3 | Evaluation 1 | Evaluation 2 | Evaluation 3 |
| Separability | | 5 | 5 | 5 | 5 | 5 | 5 |
| Rubfastness | | 4 | 4 | 4 | 3 | 3 | 3 |
| Jettability | | 5 | - | 5 | 5 | - | 5 |
| Water resistance | | 5 | 5 | 5 | 5 | 5 | 5 |
| Odor | | 5 | 5 | 5 | 5 | 5 | 5 |

Table 5-1

| | | Example 14 | | | Example 15 | | |
|---|---|---|---|---|---|---|---|
| | | First ink | Second ink | Third ink | First ink | Second ink | Third ink |
| Specific bifunctional (meth)acrylate | 3MPDDA | 39.6 | 26.2 | 68.1 | 41.1 | 27.7 | 68.1 |
| Specific monofunctional (meth)acrylate | 4-HBA | 40 | 40 | 10 | 40 | 40 | 10 |
| Acid group-containing polymerizable monomer | A-SA | - | - | 15 | - | - | 15 |
| Additional polymerizable compound | EOTMPTA | 2 | 0.25 | 0.1 | 2 | 0.25 | 0.1 |
| Polymerization initiator | BAPO | 4 | 4 | 3.8 | 4 | 4 | 3.8 |
| | Speedcure 7010 | 2 | 0.25 | 0.1 | 2 | 0.25 | 0.1 |
| Polymerization inhibitor | UV12 | 0.5 | 0.5 | 0.2 | 0.5 | 0.5 | 0.2 |
| | UV22 | 0.095 | 0.3 | - | 0.095 | 0.3 | - |
| Silicone-based surfactant | Tegorad 2010 | 6 | 6 | 2 | 4.5 | 4.5 | 2 |
| | Tegorad 2500 | 1.5 | 1.5 | 0.5 | 1.5 | 1.5 | 0.5 |
| | Tegorad 2100 | - | - | - | - | - | - |
| Acrylic resin | BR113 | 0.6 | 0.3 | 0.2 | 0.6 | 0.3 | 0.2 |
| Coloring agent | Cyan pigment | 2.85 | - | - | 2.85 | - | - |
| | White pigment | - | 18 | - | - | 18 | - |
| Dispersing agent | SOLSPERESE 32000 | 0.855 | 2.7 | - | 0.855 | 2.7 | - |
| Ms/Mc | | 12.5 | 25 | - | 10 | 20 | - |
| | | Evaluation 1 | Evaluation 2 | Evaluation 3 | Evaluation 1 | Evaluation 2 | Evaluation 3 |
| Separability | | 5 | 5 | 5 | 5 | 5 | 5 |
| Rubfastness | | 3 | 3 | 3 | 4 | 4 | 4 |
| Jettability | | 5 | - | 5 | 5 | - | 5 |
| Water resistance | | 5 | 5 | 5 | 5 | 5 | 5 |
| Odor | | 5 | 5 | 5 | 5 | 5 | 5 |

Table 5-2

| | | Example 16 | | | Example 17 | | |
|---|---|---|---|---|---|---|---|
| | | First ink | Second ink | Third ink | First ink | Second ink | Third ink |
| Specific bifunctional (meth)acrylate | 3MPDDA | 43.1 | 29.7 | 68.1 | 46.6 | 33.2 | 68.1 |
| Specific monofunctional (meth)acrylate | 4-HBA | 40 | 40 | 10 | 40 | 40 | 10 |

(continued)

| | | Example 16 | | | Example 17 | | |
|---|---|---|---|---|---|---|---|
| | | First ink | Second ink | Third ink | First ink | Second ink | Third ink |
| Acid group-containing polymerizable monomer | A-SA | - | - | 15 | - | - | 15 |
| Additional polymerizable compound | EOTMPTA | 2 | 0.25 | 0.1 | 2 | 0.25 | 0.1 |
| Polymerization initiator | BAPO | 4 | 4 | 3.8 | 4 | 4 | 3.8 |
| | Speedcure 7010 | 2 | 0.25 | 0.1 | 2 | 0.25 | 0.1 |
| Polymerization inhibitor | UV12 | 0.5 | 0.5 | 0.2 | 0.5 | 0.5 | 0.2 |
| | UV22 | 0.095 | 0.3 | - | 0.095 | 0.3 | - |
| Silicone-based surfactant | Tegorad 2010 | 3 | 3 | 2 | 0.4 | 0.4 | 2 |
| | Tegorad 2500 | 1 | 1 | 0.5 | 0.1 | 0.1 | 0.5 |
| | Tegorad 2100 | - | - | - | - | - | - |
| Acrylic resin | BR113 | 0.6 | 0.3 | 0.2 | 0.6 | 0.3 | 0.2 |
| Coloring agent | Cyan pigment | 2.85 | - | - | 2.85 | - | - |
| | White pigment | - | 18 | - | - | 18 | - |
| Dispersing agent | SOLSPERESE 32000 | 0.855 | 2.7 | - | 0.855 | 2.7 | - |
| Ms/Mc | | 6.667 | 13.33 | - | 0.833 | 1.667 | - |
| | | Evaluation 1 | Evaluation 2 | Evaluation 3 | Evaluation 1 | Evaluation 2 | Evaluation 3 |
| Separability | | 5 | 5 | 5 | 3 | 3 | 3 |
| Rubfastness | | 5 | 5 | 5 | 5 | 5 | 5 |
| Jettability | | 5 | - | 5 | 5 | - | 5 |
| Water resistance | | 5 | 5 | 5 | 5 | 5 | 5 |
| Odor | | 5 | 5 | 5 | 5 | 5 | 5 |

Table 6-1

| | | Example 18 | | | Example 19 | | |
|---|---|---|---|---|---|---|---|
| | | First ink | Second ink | Third ink | First ink | Second ink | Third ink |
| Specific bifunctional (meth)acrylate | 3MPDDA | 36.7 | 23.5 | 68 | 44.1 | 30.7 | 68.1 |
| Specific monofunctional (meth)acrylate | 4-HBA | 40 | 40 | 10 | 40 | 40 | 10 |
| Acid group-containing polymerizable monomer | A-SA | - | - | 15 | - | - | 15 |
| Additional polymerizable compound | EOTMPTA | 2 | 0.25 | 0.1 | 2 | 0.25 | 0.1 |

(continued)

| | | Example 18 | | | Example 19 | | |
|---|---|---|---|---|---|---|---|
| | | First ink | Second ink | Third ink | First ink | Second ink | Third ink |
| Polymerization initiator | BAPO | 4 | 4 | 3.8 | 4 | 4 | 3.8 |
| | Speedcure 7010 | 2 | 0.25 | 0.1 | 2 | 0.25 | 0.1 |
| Polymerization inhibitor | UV12 | 0.5 | 0.5 | 0.2 | 0.5 | 0.5 | 0.2 |
| | UV22 | 0.095 | 0.3 | - | 0.095 | 0.3 | - |
| Silicone-based surfactant Acrylic resin | Tegorad 2010 | 8 | 8 | 2 | 2 | 2 | 2 |
| | Tegorad 2500 | 2 | 2 | 0.5 | 1 | 1 | 0.5 |
| | Tegorad 2100 | - | - | - | - | - | - |
| Acrylic resin | BR113 | 1 | 0.5 | 0.3 | 0.6 | 0.3 | 0.2 |
| Coloring agent | Cyan pigment | 2.85 | - | - | 2.85 | - | - |
| | White pigment | - | 18 | - | - | 18 | - |
| Dispersing agent | SOLSPERESE 32000 | 0.855 | 2.7 | - | 0.855 | 2.7 | - |
| Ms/Mc | | 10 | 20 | - | 5 | 10 | - |
| | | Evaluation 1 | Evaluation 2 | Evaluation 3 | Evaluation 1 | Evaluation 2 | Evaluation 3 |
| Separability | | 3 | 3 | 3 | 5 | 5 | 5 |
| Rubfastness | | 3 | 3 | 3 | 5 | 5 | 5 |
| Jettability | | 5 | - | 5 | 5 | - | 5 |
| Water resistance | | 5 | 5 | 5 | 5 | 5 | 5 |
| Odor | | 5 | 5 | 5 | 5 | 5 | 5 |

Table 6-2

| | | Example 20 | | | Example 21 | | |
|---|---|---|---|---|---|---|---|
| | | First ink | Second ink | Third ink | First ink | Second ink | Third ink |
| Specific bifunctional (meth)acrylate | 3MPDDA | 45.6 | 32.2 | 68.1 | 43.1 | 29.7 | 57.6 |
| Specific monofunctional (meth)acrylate | 4-HBA | 40 | 40 | 10 | 40 | 40 | 10 |
| Acid group-containing polymerizable monomer | A-SA | - | - | 15 | - | - | 15 |
| Additional polymerizable compound | EOTMPTA | 2 | 0.25 | 0.1 | 2 | 0.25 | 0.1 |
| Polymerization initiator | BAPO | 4 | 4 | 3.8 | 4 | 4 | 3.8 |
| | Speedcure 7010 | 2 | 0.25 | 0.1 | 2 | 0.25 | 0.1 |
| Polymerization inhibitor | UV12 | 0.5 | 0.5 | 0.2 | 0.5 | 0.5 | 0.2 |
| | UV22 | 0.095 | 0.3 | - | 0.095 | 0.3 | - |

(continued)

| | | Example 20 | | | Example 21 | | |
|---|---|---|---|---|---|---|---|
| | | First ink | Second ink | Third ink | First ink | Second ink | Third ink |
| Silicone-based surfactant Acrylic resin | Tegorad 2010 | 1 | 1 | 2 | 3 | 3 | - |
| | Tegorad 2500 | 0.5 | 0.5 | 0.5 | 1 | 1 | - |
| | Tegorad 2100 | - | - | - | - | - | 13 |
| Acrylic resin | BR113 | 0.6 | 0.3 | 0.2 | 0.6 | 0.3 | 0.2 |
| Coloring agent | Cyan pigment | 2.85 | - | - | 2.85 | - | - |
| | White pigment | - | 18 | - | - | 18 | - |
| Dispersing agent | SOLSPERESE 32000 | 0.855 | 2.7 | - | 0.855 | 2.7 | - |
| Ms/Mc | | 2.5 | 5 | - | 6.667 | 13.33 | - |
| | | Evaluation 1 | Evaluation 2 | Evaluation 3 | Evaluation 1 | Evaluation 2 | Evaluation 3 |
| Separability | | 4 | 4 | 4 | 5 | 4 | 4 |
| Rubfastness | | 5 | 5 | 5 | 5 | 3 | 3 |
| Jettability | | 5 | - | 5 | 5 | - | 5 |
| Water resistance | | 5 | 5 | 5 | 5 | 5 | 5 |
| Odor | | 5 | 5 | 5 | 5 | 5 | 5 |

Table 7-1

| | | Example 22 | | | Example 23 | | |
|---|---|---|---|---|---|---|---|
| | | First ink | Second ink | Third ink | First ink | Second ink | Third ink |
| Specific bifunctional (meth)acrylate | 3MPDDA | 41.7 | 29.5 | 68.1 | - | - | - |
| | HDDA | - | - | - | 41.7 | 29.5 | 68.1 |
| | NDDA | - | - | - | - | - | - |
| | DDDA | - | - | - | - | - | - |
| | BDDA | - | - | - | - | - | - |
| Specific monofunctional (meth)acrylate | 4-HBA | 40 | 40 | 10 | 40 | 40 | 10 |
| Acid group-containing polymerizable monomer | A-SA | - | - | 15 | - | - | 15 |
| Additional polymerizable compound | EOTMPTA | 2 | 0.25 | 0.1 | 2 | 0.25 | 0.1 |
| Polymerization initiator | BAPO | 4 | 4 | 3.8 | 4 | 4 | 3.8 |
| | Speedcure 7010 | 2 | 0.25 | 0.1 | 2 | 0.25 | 0.1 |
| Polymerization inhibitor | UV12 | 0.5 | 0.5 | 0.2 | 0.5 | 0.5 | 0.2 |
| | UV22 | 0.095 | 0.3 | - | 0.095 | 0.3 | - |
| Silicone-based surfactant | Tegorad 2010 | 4 | 3 | 2 | 4 | 3 | 2 |
| | Tegorad 2500 | 1 | 1 | 0.5 | 1 | 1 | 0.5 |

(continued)

| | | Example 22 | | | Example 23 | | |
|---|---|---|---|---|---|---|---|
| | | First ink | Second ink | Third ink | First ink | Second ink | Third ink |
| Acrylic resin | BR113 | 1 | 0.5 | 0.2 | 1 | 0.5 | 0.2 |
| Coloring agent | Cyan pigment | 2.85 | - | - | 2.85 | - | - |
| | White pigment | - | 18 | - | - | 18 | - |
| Dispersing agent | SOLSPERESE 32000 | 0.855 | 2.7 | - | 0.855 | 2.7 | - |
| Ms/Mc | | 5 | 8 | - | 5 | 8 | - |
| | | Evaluation 1 | Evaluation 2 | Evaluation 3 | Evaluation 1 | Evaluation 2 | Evaluation 3 |
| Separability | | 5 | 5 | 5 | 5 | 5 | 5 |
| Rubfastness | | 5 | 5 | 5 | 5 | 5 | 5 |
| Jettability | | 5 | - | 5 | 5 | - | 5 |
| Water resistance | | 5 | 5 | 5 | 5 | 5 | 5 |
| Odor | | 5 | 5 | 5 | 5 | 5 | 5 |

Table 7-2

| | | Example 24 | | | Example 25 | | | Example 26 | | |
|---|---|---|---|---|---|---|---|---|---|---|
| | | First ink | Second ink | Third ink | First ink | Second ink | Third ink | First ink | Second ink | Third ink |
| Specific bifunctional (meth) acryl ate | 3MPDDA | - | - | - | - | - | - | - | - | - |
| | HDDA | - | - | - | - | - | - | - | - | - |
| | NDDA | 41.7 | 29.5 | 68.1 | - | - | - | - | - | - |
| | DDDA | - | - | - | 41.7 | 29.5 | 68.1 | - | - | - |
| | BDDA | - | - | - | - | - | - | 41.7 | 29.5 | 68.1 |
| Specific monofuncti onal (meth)acryl ate | 4-HBA | 40 | 40 | 10 | 40 | 40 | 10 | 40 | 40 | 10 |
| Acid group-containing polymeriza ble monomer | A-SA | - | - | 15 | - | - | 15 | - | - | 15 |
| Additional polymeriza ble compound | EOTMPT A | 2 | 0.25 | 0.1 | 2 | 0.25 | 0.1 | 2 | 0.25 | 0.1 |
| Polymerizat ion initiator | BAPO | 4 | 4 | 3.8 | 4 | 4 | 3.8 | 4 | 4 | 3.8 |
| | Speedcure 7010 | 2 | 0.25 | 0.1 | 2 | 0.25 | 0.1 | 2 | 0.25 | 0.1 |
| Polymerizat ion inhibitor | UV12 | 0.5 | 0.5 | 0.2 | 0.5 | 0.5 | 0.2 | 0.5 | 0.5 | 0.2 |
| | UV22 | 0.095 | 0.3 | - | 0.095 | 0.3 | - | 0.095 | 0.3 | - |
| Silicone-based surfactant | Tegorad 2010 | 4 | 3 | 2 | 4 | 3 | 2 | 4 | 3 | 2 |
| | Tegorad 2500 | 1 | 1 | 0.5 | 1 | 1 | 0.5 | 1 | 1 | 0.5 |
| Acrylic resin | BR113 | 1 | 0.5 | 0.2 | 1 | 0.5 | 0.2 | 1 | 0.5 | 0.2 |
| Coloring agent | Cyan pigment | 2.85 | - | - | 2.85 | - | - | 2.85 | - | - |
| | White pigment | - | 18 | - | - | 18 | - | - | 18 | - |
| Dispersing agent | SOLSPER ESE 32000 | 0.855 | 2.7 | - | 0.855 | 2.7 | - | 0.855 | 2.7 | - |
| Ms/Mc | | 5 | 8 | - | 5 | 8 | - | 5 | 8 | - |

(continued)

| | Evaluation 1 | Evaluation 2 | Evaluation 3 | Evaluation 1 | Evaluation 2 | Evaluation 3 | Evaluation 1 | Evaluation 2 | Evaluation 3 |
|---|---|---|---|---|---|---|---|---|---|
| Separability | 5 | 5 | 5 | 5 | 5 | 5 | 5 | 5 | 5 |
| Rubfastness | 5 | 5 | 5 | 5 | 5 | 5 | 5 | 5 | 5 |
| Jettability | 4 | - | 4 | 3 | - | 3 | 5 | - | 5 |
| Water resistance | 5 | 5 | 5 | 5 | 5 | 5 | 3 | 3 | 3 |
| Odor | 5 | 5 | 5 | 5 | 5 | 5 | 3 | 3 | 3 |

Table 8-1

| | | Example 27 | | | Example 28 | | |
|---|---|---|---|---|---|---|---|
| | | First ink | Second ink | Third ink | First ink | Second ink | Third ink |
| Specific bifunctional (meth)acrylate | 3MPDDA | 31.7 | 15.5 | 48.1 | 21.7 | 12.5 | 28.1 |
| Specific monofunctional (meth)acrylate | 4-HBA | 40 | 40 | 10 | 40 | 40 | 10 |
| Acid group-containing polymerizable monomer | A-SA | - | - | 15 | - | - | 15 |
| Additional polymerizable compound | CTFA | 10 | 14 | 20 | 20 | 17 | 40 |
| | PEG400DA | - | - | - | - | - | - |
| | EOTMPTA | 2 | 0.25 | 0.1 | 2 | 0.25 | 0.1 |
| Polymerization initiator | BAPO | 4 | 4 | 3.8 | 4 | 4 | 3.8 |
| | Speedcure 7010 | 2 | 0.25 | 0.1 | 2 | 0.25 | 0.1 |
| Polymerization inhibitor | UV12 | 0.5 | 0.5 | 0.2 | 0.5 | 0.5 | 0.2 |
| | UV22 | 0.095 | 0.3 | - | 0.095 | 0.3 | - |
| Silicone-based surfactant | Tegorad 2010 | 4 | 3 | 2 | 4 | 3 | 2 |
| | Tegorad 2500 | 1 | 1 | 0.5 | 1 | 1 | 0.5 |
| Acrylic resin | BR113 | 1 | 0.5 | 0.2 | 1 | 0.5 | 0.2 |
| Coloring agent | Cyan pigment | 2.85 | - | - | 2.85 | - | - |
| | White pigment | - | 18 | - | - | 18 | - |
| Dispersing agent | SOLSPERESE 32000 | 0.855 | 2.7 | - | 0.855 | 2.7 | - |
| Ms/Mc | | 5 | 8 | - | 5 | 8 | - |
| | | Evaluation 1 | Evaluation 2 | Evaluation 3 | Evaluation 1 | Evaluation 2 | Evaluation 3 |
| Separability | | 5 | 5 | 5 | 5 | 5 | 5 |
| Rubfastness | | 4 | 4 | 4 | 3 | 3 | 3 |
| Jettability | | 5 | - | 5 | 5 | - | 5 |
| Water resistance | | 5 | 5 | 5 | 5 | 5 | 5 |
| Odor | | 4 | 4 | 4 | 3 | 3 | 3 |

Table 8-2

| | | Comparative Example 4 | | | Comparative Example 5 | | | Comparative Example 6 | | |
|---|---|---|---|---|---|---|---|---|---|---|
| | | First ink | Second ink | Third ink | First ink | Second ink | Third ink | First ink | Second ink | Third ink |
| Specific bifunctional (meth) acryl ate | 3MPDDA | - | - | - | - | - | - | 15.7 | 19 | 10 |
| Specific monofuncti onal (meth)acryl ate | 4-HBA | 40 | 40 | 10 | 40 | 40 | 10 | 40 | 40 | 10 |
| Acid group-containing polymeriza ble monomer | A-SA | - | - | 15 | - | - | 15 | - | - | 15 |
| Additional polymeriza ble compound | CTFA | 41.7 | 29.5 | 68.1 | - | - | - | 26 | 10.5 | 58.1 |
| | PEG400D A | - | - | - | 41.7 | 29.5 | 68.1 | - | - | - |
| | EOTMPT A | 2 | 0.25 | 0.1 | 2 | 0.25 | 0.1 | 2 | 0.25 | 0.1 |
| Polymerizat ion initiator | BAPO | 4 | 4 | 3.8 | 4 | 4 | 3.8 | 4 | 4 | 3.8 |
| | Speedcure 7010 | 2 | 0.25 | 0.1 | 2 | 0.25 | 0.1 | 2 | 0.25 | 0.1 |
| Polymerizat ion inhibitor | UV12 | 0.5 | 0.5 | 0.2 | 0.5 | 0.5 | 0.2 | 0.5 | 0.5 | 0.2 |
| | UV22 | 0.095 | 0.3 | - | 0.095 | 0.3 | - | 0.095 | 0.3 | - |
| Silicone-based surfactant | Tegorad 2010 | 4 | 3 | 2 | 4 | 3 | 2 | 4 | 3 | 2 |
| | Tegorad 2500 | 1 | 1 | 0.5 | 1 | 1 | 0.5 | 1 | 1 | 0.5 |
| Acrylic resin | BR113 | 1 | 0.5 | 0.2 | 1 | 0.5 | 0.2 | 1 | 0.5 | 0.2 |
| Coloring agent | Cyan pigment | 2.85 | - | - | 2.85 | - | - | 2.85 | - | - |
| | White pigment | - | 18 | - | - | 18 | - | - | 18 | - |
| Dispersing agent | SOLSPER ESE 32000 | 0.855 | 2.7 | - | 0.855 | 2.7 | - | 0.855 | 2.7 | - |
| Ms/Mc | | 5 | 8 | - | 5 | 8 | - | 5 | 8 | - |
| | | Evaluati on 1 | Evaluati on 2 | Evaluati on 3 | Evaluati on 1 | Evaluati on 2 | Evaluati on 3 | Evaluati on 1 | Evaluati on 2 | Evaluati on 3 |
| Separability | | 5 | 5 | 5 | - | - | - | 5 | 5 | 5 |
| Rubfastness | | 1 | 1 | 1 | - | - | - | 2 | 2 | 2 |

(continued)

| | Evaluati on 1 | Evaluati on 2 | Evaluati on 3 | Evaluati on 1 | Evaluati on 2 | Evaluati on 3 | Evaluati on 1 | Evaluati on 2 | Evaluati on 3 |
|---|---|---|---|---|---|---|---|---|---|
| Jettability | 5 | - | 5 | 1 | - | 1 | 5 | 5 | 5 |
| Water resistance | 5 | 5 | 5 | - | - | - | 5 | 5 | 5 |
| Odor | 1 | 1 | 1 | - | - | - | 2 | 2 | 2 |

Table 9-1

| | | Example 29 | | | Example 30 | | | Example 31 | | |
|---|---|---|---|---|---|---|---|---|---|---|
| | | First ink | Second ink | Third ink | First ink | Second ink | Third ink | First ink | Second ink | Third ink |
| Specific bifunctional (meth) acryla te | 3MPDDA | 42.2 | 29.75 | 66.85 | 42.2 | 30.5 | 67.6 | 42.2 | 30.5 | 67.6 |
| Specific monofunctio nal (meth)acryla te | 4-HBA | 40 | 40 | 10 | 40 | 40 | 10 | 40 | 40 | 10 |
| Acid group-containing polymerizab le monomer | A-SA | - | - | 15 | - | - | 15 | - | - | 15 |
| Additional polymerizab le compound | EOTMPTA | 2 | 0.25 | 0.1 | 2 | 0.25 | 0.1 | 2 | 0.25 | 0.1 |
| Polymerizati on initiator | BAPO | 4 | 4 | 3.8 | 4 | 4 | 3.8 | 4 | 4 | 3.8 |
| | Speedcure 7010 | 2 | 0.25 | 0.1 | 2 | 0.25 | 0.1 | 2 | 0.25 | 0.1 |
| Polymerizati on inhibitor | UV12 | 0.5 | 0.5 | 0.2 | 0.5 | 0.5 | 0.2 | 0.5 | 0.5 | 0.2 |
| | UV22 | 0.095 | 0.3 | - | 0.095 | 0.3 | - | 0.095 | 0.3 | - |
| Silicone-based surfactant | TEGORAD 2200N | - | - | - | 4.5 | 3 | 3 | - | - | - |
| | TEGORAD 2250 | - | - | - | - | - | - | 4.5 | 3 | 3 |
| | TEGORAD 2010 | 3 | 3 | 3 | - | - | - | - | - | - |
| | TEGORAD 2500 | 1.5 | 0.75 | 0.75 | - | - | - | - | - | - |
| Acrylic resin | BR113 | 1 | 0.5 | 0.2 | 1 | 0.5 | 0.2 | 1 | 0.5 | 0.2 |
| Coloring agent | Cyan pigment | 2.85 | - | - | 2.85 | - | - | 2.85 | - | - |
| | White pigment | - | 18 | - | - | 18 | - | - | 18 | - |
| Dispersing agent | SOLSPERE SE 32000 | 0.855 | 2.7 | - | 0.855 | 2.7 | - | 0.855 | 2.7 | - |
| Ms/Mc | | 4.5 | 7.5 | - | 4.5 | 6.0 | - | 4.5 | 6.0 | - |

(continued)

| | Evaluation 1 | Evaluation 2 | Evaluation 3 | Evaluation 1 | Evaluation 2 | Evaluation 3 | Evaluation 1 | Evaluation 2 | Evaluation 3 |
|---|---|---|---|---|---|---|---|---|---|
| Separability | 5 | 5 | 5 | 3 | 3 | 3 | 3 | 3 | 3 |
| Rubfastness | 5 | 5 | 5 | 5 | 5 | 5 | 5 | 5 | 5 |
| Jettability | 5 | - | 5 | 5 | - | 5 | 5 | - | 5 |
| Water resistance | 5 | 5 | 5 | 5 | 5 | 5 | 5 | 5 | 5 |
| Odor | 5 | 5 | 5 | 5 | 5 | 5 | 5 | 5 | 5 |

Table 9-2

| | | Example 32 | | | Example 33 | | | Example 34 | | |
|---|---|---|---|---|---|---|---|---|---|---|
| | | First ink | Second ink | Third ink | First ink | Second ink | Third ink | First ink | Second ink | Third ink |
| Specific bifunctional (meth) acryl ate | 3MPDDA | 42.2 | 30.5 | 67.6 | 42.2 | 30.5 | 67.6 | 42.2 | 30.5 | 67.6 |
| Specific monofuncti onal (meth)acryl ate | 4-HBA | 40 | 40 | 10 | 40 | 40 | 10 | 40 | 40 | 10 |
| Acid group-containing polymeriza ble monomer | A-SA | - | - | 15 | - | - | 15 | - | - | 15 |
| Additional polymeriza ble compound | EOTMPT A | 2 | 0.25 | 0.1 | 2 | 0.25 | 0.1 | 2 | 0.25 | 0.1 |
| Polymerizat ion initiator | BAPO | 4 | 4 | 3.8 | 4 | 4 | 3.8 | 4 | 4 | 3.8 |
| | Speedcure 7010 | 2 | 0.25 | 0.1 | 2 | 0.25 | 0.1 | 2 | 0.25 | 0.1 |
| Polymerizat ion inhibitor | UV12 | 0.5 | 0.5 | 0.2 | 0.5 | 0.5 | 0.2 | 0.5 | 0.5 | 0.2 |
| | UV22 | 0.095 | 0.3 | - | 0.095 | 0.3 | - | 0.095 | 0.3 | - |
| Silicone-based surfactant | TEGORA D 2300 | 4.5 | 3 | 3 | - | - | - | - | - | - |
| | TEGORA D 2010 | - | - | - | 4.5 | 3 | 3 | - | - | - |
| | TEGORA D 2100 | - | - | - | - | - | - | 4.5 | 3 | 3 |
| Acrylic resin | BR113 | 1 | 0.5 | 0.2 | 1 | 0.5 | 0.2 | 1 | 0.5 | 0.2 |
| Coloring agent | Cyan pigment | 2.85 | - | - | 2.85 | - | - | 2.85 | - | - |
| | White pigment | - | 18 | - | - | 18 | - | - | 18 | - |
| Dispersing agent | SOLSPER ESE 32000 | 0.855 | 2.7 | - | 0.855 | 2.7 | - | 0.855 | 2.7 | - |
| Ms/Mc | | 4.5 | 6.0 | - | 4.5 | 6.0 | - | 4.5 | 6.0 | - |

(continued)

| | Evaluation 1 | Evaluation 2 | Evaluation 3 | Evaluation 1 | Evaluation 2 | Evaluation 3 | Evaluation 1 | Evaluation 2 | Evaluation 3 |
|---|---|---|---|---|---|---|---|---|---|
| Separability | 4 | 4 | 4 | 4 | 4 | 4 | 3 | 3 | 3 |
| Rubfastness | 5 | 5 | 5 | 5 | 5 | 5 | 5 | 5 | 5 |
| Jettability | 5 | - | 5 | 5 | - | 5 | 5 | - | 5 |
| Water resistance | 5 | 5 | 5 | 5 | 5 | 5 | 5 | 5 | 5 |
| Odor | 5 | 5 | 5 | 5 | 5 | 5 | 5 | 5 | 5 |

As can be seen from Tables 2-1 to 9, in Examples 1 to 34, each ink contains the bifunctional (meth)acrylate having a linear or branched alkylene group having 4 to 10 carbon atoms, the silicone-based surfactant(s) having a (meth)acryloyl group, the coloring agent, and the acrylic resin having a glass transition temperature of 30°C or higher, and the content of the bifunctional (meth)acrylate to the total mass of the active energy ray curable type ink jet ink is 20% by mass or more. Therefore, the image recorded articles obtained had good rubfastness and good separability.

However, in Comparative Example 1, the acrylic resin having a glass transition temperature of 30°C or higher is not contained. Therefore, the rubfastness was found to be poor.

In Comparative Example 2, the silicone-based surfactant having a (meth)acryloyl group is not contained. Therefore, the separability was found to be poor.

In Comparative Example 3, the glass transition temperature of the acrylic resin is lower than 30°C. Therefore, the rubfastness was found to be poor.

In Comparative Example 4, the bifunctional (meth)acrylate having a linear or branched alkylene group having 4 to 10 carbon atoms is not contained. Therefore, the rubfastness was found to be poor.

In Comparative Example 5, the bifunctional (meth)acrylate having a linear or branched alkylene group having 4 to 10 carbon atoms is not contained. Therefore, the inks could not be jetted, and the image recorded articles could not be obtained.

In the first ink in Example 1, the ratio of the content mass of the silicone-based surfactant having a (meth)acryloyl group to the content mass of the acrylic resin is 4 or more. Therefore, the jettability was found to be better than that in Example 5.

In the first ink in Example 1, the ratio of the content mass of the silicone-based surfactant having a (meth)acryloyl group to the content mass of the acrylic resin is 7 or less. Therefore, the rubfastness was found to be better than that in Example 4.

In Example 29, the ratio of the content mass of the polysiloxane structure to the content mass of the polyether structure in the silicone-based surfactant having a (meth)acryloyl group contained in the first ink is 0.5 or more. Therefore, the separability was found to be better than that in Examples 30 and 31.

In Example 8, the weight average molecular weight of the acrylic resin contained in the first ink is 5,000 to 100,000. Therefore, the rubfastness was found to be better than that in Examples 12 and 13.

<Example 101>

A first ink C1 (cyan ink), a first ink M1 (magenta ink), a first ink Y1 (yellow ink), a first ink K1 (black ink), a second ink W1 (white ink), and a third ink P1 (clear ink) were prepared.

The first ink C1 used was the first ink in Example 1.

The second ink W1 used was the second ink in Example 1.

The third ink P1 used was the third ink in Example 1.

[Preparation of first inks M1, Y1, and K1]

First, a magenta pigment dispersion, a yellow pigment dispersion, and a black pigment dispersion were prepared.

The magenta pigment dispersion, the yellow pigment dispersion, and the black pigment dispersion were prepared by replacing the cyan pigment used to prepare the cyan pigment dispersion with a magenta pigment, a yellow pigment, and a black pigment, respectively.

The details of the magenta pigment, the yellow pigment, and the black pigment are as follows.

- Magenta pigment: C.I. Pigment RED 122, product name: "TRM-33" manufactured by Dainichiseika Color & Chemicals Mfg. Co., Ltd.
- Yellow pigment: C.I. Pigment Yellow 185, product name: "Paliotol Yellow D 1155" manufactured by Sun Chemical (DIC Corporation)
- Black pigment: Carbon black, product name: "MOGUL E" manufactured by CABOT

Next, the prepared magenta pigment dispersion, the prepared yellow pigment dispersion, and the prepared black pigment dispersion were independently mixed with components shown in Table 10 such that the contents of the components were equal to values (% by mass) shown in Table 10. The mixtures were stirred using mixers (product name: "L4R" manufactured by Silverson) under the conditions of 25°C and 5000 rpm for 20 minutes, and the first inks M1, Y1, and K1 were thereby obtained.

Table 10

| | | Example 101 | | | | | |
|---|---|---|---|---|---|---|---|
| | | First ink C1 | First ink M1 | First ink Y1 | First ink K1 | Second ink W1 | Third ink P1 |
| Specific bifunctional (meth) acrylate | 3MPDDA | 41.7 | 39.9 | 40.7 | 42.7 | 29.5 | 68.1 |
| Specific monofunctional (meth)acrylate | 4-HBA | 40 | 40 | 40 | 40 | 40 | 10 |
| Acid group-containing polymerizable monomer | A-SA | - | - | - | - | - | 15 |
| Additional polymerizable compound | EOTMPTA | 2 | 2 | 2 | 2 | 0.25 | 0.1 |
| Polymerization initiator | BAPO | 4 | 4 | 4 | 4 | 4 | 3.8 |
| | Speedcure 7010 | 2 | 2 | 2 | 2 | 0.25 | 0.1 |
| Polymerization inhibitor | UV12 | 0.5 | 0.5 | 0.5 | 0.5 | 0.5 | 0.2 |
| | UV22 | 0.095 | 0.14 | 0.12 | 0.07 | 0.3 | - |
| Silicone-based surfactant | Tegorad 2010 | 4 | 4 | 4 | 4 | 3 | 2 |
| | Tegorad 2500 | 1 | 1 | 1 | 1 | 1 | 0.5 |
| Acrylic resin | BR113 | 1 | 1 | 1 | 1 | 0.5 | 0.2 |
| Coloring agent | Cyan pigment | 2.85 | - | - | - | - | - |
| | Magenta pigment | - | 4.2 | - | - | - | - |
| | Yellow pigment | - | - | 3.6 | - | - | - |
| | Black pigment | - | - | - | 2.1 | - | - |
| | White pigment | - | - | - | - | 18 | - |
| Dispersing agent | SOLSPERESE 32000 | 0.855 | 1.26 | 1.08 | 0.63 | 2.7 | - |

[Image recording]

The third ink P1 was applied to a barrel portion of a PET bottle (product name: "PET 500 maru" manufactured by KOKUGO Co., Ltd.) using an ink jet recording apparatus (product name: "CylinderJET" manufactured by Tritek Co., Ltd.) and an ink jet head (product name: "KM1800i" manufactured by KONICA MINOLTA, INC.). Specifically, the third ink P1 was applied to a surface region of the PET bottle having a size of 7 cm in the longitudinal direction of the PET bottle × 5 cm in its circumferential direction under the conditions of an ink droplet amount of 10.5 pL (picoliters) and a resolution of 600 × 600 dpi (dot per inch) to thereby record a 100% solid image with a thickness of 4 μm to 6 μm. Then the second ink W1, the first ink K1, the first ink C1, the first ink M1, and the first ink Y1 were applied in this order to the surface region with the third ink P1 applied thereto under the same conditions as those for the application of the third ink P1 to thereby record 100% solid images each having a thickness of 4 μm to 6 μm.

After the application of the third ink P1, after the application of the second ink W1, after the application of the first ink K1, after the application of the first ink C1, after the application of the first ink M1, and also after the application of the first ink Y1, an LED light source included with the ink jet recording apparatus was used to apply UV rays at an exposure of 10 $mJ/cm^2$ to 100 $mJ/cm^2$. The LED light source used was a UV-LED irradiator (product name: "G4B" manufactured by KYOCERA Corporation) having a peak wavelength of 385 nm.

Then the PET bottle with the images recorded thereon was placed in an exposing device. The PET bottle was placed horizontally. The exposing device can rotate the PET bottle. While the entire images recorded on the PET bottle were rotated, the LED light source was used to expose the images to light. The UV rays were applied at an exposure of 50 $mJ/cm^2$ to 500 $mJ/cm^2$ to completely cure the third ink P1, the second ink W1, the first ink K1, the first ink C1, the first ink M1, and the first ink Y1, and an image recorded article was thereby obtained.

In the image recording described above, the gap between the surface of the PET bottle and the ink jet head was adjusted to 0.5 mm to 1 mm. By adjusting the jetting voltage, the jetted droplet speed was adjusted to 7 m/s to 9 m/s.

The image recorded articles obtained were used to evaluate the rubfastness, separability, water resistance, and odor using the same evaluation methods as those for Example 1. The jettability of each of the first inks M1, Y1, and K1 was evaluated using the same method as that for Example 1. All the evaluation ratings were "5."

The entire contents of the disclosure of JP2023-013499 filed on January 31, 2023 are incorporated herein by reference. All publications, patent applications, and technical standards described herein are incorporated herein by reference to the same extent as if each individual publication, patent, or patent application were specifically and individually indicated to be incorporated by reference.

## Claims

1. An active energy ray curable type ink jet ink comprising: a bifunctional (meth)acrylate having a linear or branched alkylene group having 4 to 10 carbon atoms; a silicone-based surfactant having a (meth)acryloyl group; a coloring agent; and an acrylic resin having a glass transition temperature of 30°C or higher,
wherein a content of the bifunctional (meth)acrylate with respect to a total mass of the active energy ray curable type ink jet ink is 20% by mass or more.

2. The active energy ray curable type ink jet ink according to claim 1, wherein a ratio of a content mass of the silicone-based surfactant having a (meth)acryloyl group to a content mass of the acrylic resin is 1 to 10.

3. The active energy ray curable type ink jet ink according to claim 1, wherein a ratio of a content mass of the silicone-based surfactant having a (meth)acryloyl group to a content mass of the acrylic resin is 4 to 7.

4. The active energy ray curable type ink jet ink according to claim 1, wherein a content of the silicone-based surfactant having a (meth)acryloyl group with respect to the total mass of the active energy ray curable type ink jet ink is 0.5% by mass to 10% by mass.

5. The active energy ray curable type ink jet ink according to claim 1, wherein a content of the silicone-based surfactant having a (meth)acryloyl group with respect to the total mass of the active energy ray curable type ink jet ink is 4% by mass to 7% by mass.

6. The active energy ray curable type ink jet ink according to claim 1, wherein the silicone-based surfactant having a (meth)acryloyl group includes a polyether structure and a polysiloxane structure, and
wherein a ratio of a content mass of the polysiloxane structure to a content mass of the polyether structure is 0.5 or more.

7. The active energy ray curable type ink jet ink according to claim 1, further comprising a monofunctional (meth)acrylate having a hydroxy group.

8. The active energy ray curable type ink jet ink according to claim 1, wherein the acrylic resin has a weight average molecular weight of 5,000 to 100,000.

9. An active energy ray curable type ink set comprising:

    a first ink that is the active energy ray curable type ink jet ink according to any one of claims 1 to 8 with the coloring agent being a pigment different from a white pigment, and
    a second ink that is the active energy ray curable type ink jet ink according to any one of claims 1 to 8 with the coloring agent being a white pigment.

10. The active energy ray curable type ink set according to claim 9, wherein, provided that a mass of the first ink is the same as a mass of the second ink, a content of the acrylic resin in the first ink is larger than a content of the acrylic resin in the second ink.

11. The active energy ray curable type ink set according to claim 9, further comprising a third ink including at least one acid group-containing compound selected from the group consisting of an acid group-containing polymerizable monomer and an acid group-containing polymer.

12. The active energy ray curable type ink set according to claim 11, wherein, provided that a mass of the first ink, a mass of

the second ink, and a mass of the third ink are the same,

a content of the acrylic resin in the first ink is larger than a content of the acrylic resin in the second ink, and the content of the acrylic resin in the first ink is larger than a content of the acrylic resin in the third ink.

**13.** An image recording method comprising the steps of:

applying the active energy ray curable type ink jet ink according to any one of claims 1 to 8 to a substrate using an ink jet recording method; and
irradiating the applied active energy ray curable type ink jet ink with active energy rays.

**14.** An image recording method that uses the active energy ray curable type ink set according to claim 9, the method comprising the steps of:

applying the second ink to a substrate using an ink jet recording method;
irradiating the applied second ink with active energy rays;
applying, using the ink jet recording method, the first ink to the substrate with the second ink applied thereto; and
irradiating the applied first ink with active energy rays.

## INTERNATIONAL SEARCH REPORT

International application No.
**PCT/JP2023/047087**

**A. CLASSIFICATION OF SUBJECT MATTER**

***C09D 11/38***(2014.01)i; ***C09D 11/40***(2014.01)i; ***C09D 11/101***(2014.01)i
FI: C09D11/38; C09D11/101; C09D11/40

According to International Patent Classification (IPC) or to both national classification and IPC

**B. FIELDS SEARCHED**

Minimum documentation searched (classification system followed by classification symbols)

C09D11/00-11/54

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>A | JP 2022-42842 A (FUJIFILM CORPORATION) 15 March 2022 (2022-03-15)<br>claims 1-8, paragraphs [0205]-[0217], [0226], table 2, example 19 | 1, 4, 6, 8, 13<br><br>2-3, 5, 7, 9-12, 14 |
| A | WO 2022/085246 A1 (SAKATA INX CORP.) 28 April 2022 (2022-04-28)<br>paragraph [0038] | 1-14 |
| A | WO 2014/136923 A1 (FUJIFILM CORPORATION) 12 September 2014 (2014-09-12)<br>claims 1-14 | 1-14 |
| A | WO 2013/118735 A1 (DNP FINE CHEMICALS CO., LTD.) 15 August 2013 (2013-08-15)<br>claims 1-7 | 1-14 |
| A | WO 2013/031871 A1 (TOYO INK SC HOLDINGS CO., LTD.) 07 March 2013 (2013-03-07)<br>claims 1-11 | 1-14 |
| A | JP 2011-144251 A (FUJIFILM CORPORATION) 28 July 2011 (2011-07-28)<br>claims 1-14 | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/047087**

| Patent document cited in search report | Publication date (day/month/year) | Patent family member(s) | Publication date (day/month/year) |
|---|---|---|---|
| JP 2022-42842 A | 15 March 2022 | (Family: none) | |
| WO 2022/085246 A1 | 28 April 2022 | US 2023/0383134 A1<br>paragraph [0037]<br>JP 2022-69201 A<br>EP 4234251 A1<br>CN 116113544 A<br>KR 10-2023-0088684 A | |
| WO 2014/136923 A1 | 12 September 2014 | US 2015/0353751 A1<br>claims 1-14<br>JP 2014-172971 A<br>EP 2966133 A1<br>CN 104937049 A | |
| WO 2013/118735 A1 | 15 August 2013 | US 2015/0030825 A1<br>claims 1-7<br>JP 2013-159716 A<br>EP 2821447 A1<br>CN 104093795 A<br>KR 10-2014-0121481 A<br>TW 201336946 A | |
| WO 2013/031871 A1 | 07 March 2013 | US 2014/0212634 A1<br>claims 1-13<br>JP 2013-47305 A<br>EP 2752469 A1 | |
| JP 2011-144251 A | 28 July 2011 | US 2011/0169902 A1<br>claims 1-15<br>EP 2345703 A1<br>CN 102127339 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018035369 A
- JP 2002012607 A
- JP 2002188025 A
- JP 2003026978 A
- JP 2003342503 A
- JP 4668111 B
- JP 5588887 B
- JP 2023013499 A


### Non-patent literature cited in the description


- Ganryo no Jiten (Dictionary of Pigments). 2000
- **W. HERBST** ; **K. HUNGER**. Industrial Organic Pigments